(19) Europäisches Patentamt
European Patent Office
Office européen des brevets

(11) EP 3 904 570 A1

(12) EUROPEAN PATENT APPLICATION
published in accordance with Art. 153(4) EPC

(43) Date of publication:
03.11.2021 Bulletin 2021/44

(21) Application number: 19903575.9

(22) Date of filing: 25.12.2019

(51) Int Cl.:
*D01F 2/00* (2006.01) *C08B 5/00* (2006.01)

(86) International application number:
PCT/JP2019/050804

(87) International publication number:
WO 2020/138157 (02.07.2020 Gazette 2020/27)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 28.12.2018 JP 2018248486
22.05.2019 JP 2019095764

(71) Applicant: Oji Holdings Corporation
Chuo-ku
Tokyo 104-0061 (JP)

(72) Inventors:
- NOGUCHI, Yuichi
Tokyo 104-0061 (JP)
- ZHAO, Mengchen
Tokyo 104-0061 (JP)
- TODOROKI, Yusuke
Tokyo 104-0061 (JP)

(74) Representative: Godemeyer Blum Lenze
Patentanwälte
Partnerschaft mbB - werkpatent
An den Gärten 7
51491 Overath (DE)

# (54) METHOD FOR PRODUCING FIBROUS CELLULOSE, FIBROUS CELLULOSE LIQUID DISPERSION, AND SHEET

(57) The present invention is intended to provide ultrafine cellulose fibers capable of enhancing the transparency of an ultrafine cellulose fiber-dispersed solution having phosphorous acid groups. The present invention relates to a method for producing cellulose fibers, comprising: mixing a compound having a phosphorous acid group and/or a salt thereof and urea and/or a urea derivative into a cellulose raw material to obtain a phosphorous acid esterified cellulose raw material, and performing a fibrillation treatment on the phosphorous acid esterified cellulose raw material to obtain cellulose fibers having a fiber width of 1000 nm or less and having a phosphorous acid group, wherein, in obtaining the phosphorous acid esterified cellulose raw material, the decomposition percentage of the urea and/or the urea derivative is set to be 90% or less.

EP 3 904 570 A1

## Description

### Technical Field

The present invention relates to a method for producing cellulose fibers, a cellulose fiber-dispersed solution, and a sheet.

### Background Art

Conventionally, cellulose fibers have been broadly utilized in clothes, absorbent articles, paper products, and the like. As cellulose fibers, ultrafine cellulose fibers having a fiber diameter of 1 μm or less have been known, as well as cellulose fibers having a fiber diameter of 10 μm or more and 50 μm or less. Such ultrafine cellulose fibers have attracted attention as novel materials, and the intended use thereof has been highly diversified. For example, the development of sheets, resin composites and thickeners, comprising the ultrafine cellulose fibers, has been promoted.

Ultrafine cellulose fibers can be produced by mechanically treating conventional cellulose fibers. Cellulose fibers strongly bind to one another by hydrogen bonds. Accordingly, only by simply performing a mechanical treatment, enormous energy is required to obtain ultrafine cellulose fibers. It has been known that, in order to produce ultrafine cellulose fibers by smaller mechanical treatment energy, it is effective to perform a pre-treatment such as a chemical treatment or a biological treatment, in addition to perform a mechanical treatment. In particular, if hydrophilic functional groups (for example, carboxy groups, cationic groups, phosphoric acid groups, etc.) are introduced into hydroxy groups on the surface of cellulose by a chemical treatment, electrical repulsion is generated between ions and also, the ions are hydrated, so that dispersibility in an aqueous solvent can be significantly improved. Thus, energy efficiency of fibrillation is increased, compared with a case of not performing a chemical treatment.

For example, Patent Document 1 discloses a method for producing ultrafine cellulose fibers, comprising a step of treating a fiber raw material comprising cellulose with at least one type of compound selected from phosphorus oxoacids or salts thereof, and a step of performing a defibration treatment on the resultant. Patent Document 2 discloses a method for producing phosphoric acid esterified ultrafine cellulose fibers, comprising a step of allowing a compound having a phosphoric acid group and/or a salt thereof to act on a fiber raw material comprising cellulose in the coexistence of urea and/or a derivative thereof, so as to introduce the phosphoric acid group into the fiber raw material, and a step of performing a fibrillation treatment on the resultant.

Patent Document 3 discloses a method for producing ultrafine cellulose fibers, comprising adding an additive (A) consisting of at least any one of phosphorous acids and phosphorous acid metal salts and an additive (B) consisting of at least any one of urea and urea derivatives to cellulose fibers, and heating and washing the obtained mixture, followed by defibration.

### Prior Art Documents

#### Patent Documents

Patent Document 1: Japanese Patent Publication No. 2013-127141 A
Patent Document 2: International Publication WO2014/185505
Patent Document 3: International Publication WO2018/159473

### Summary of Invention

#### Object to be Solved by the Invention

As described above, ultrafine cellulose fibers having phosphorus oxoacid groups have been known. The present inventors had intended to prepare a dispersed solution comprising ultrafine cellulose fibers having phosphorous acid groups. As a result, it was found that the transparency of the obtained dispersed solution might be low in some cases, and thus that there is still a room for improvement.

Hence, in order to solve the aforementioned problem of the prior art technique, the present inventors have conducted studies for the purpose of providing ultrafine cellulose fibers capable of enhancing the transparency of a dispersed solution comprising the ultrafine cellulose fibers having phosphorous acid groups.

Means for Solving the Object

As a result of intensive studies directed towards achieving the aforementioned object, the present inventors have found that, in a step of producing ultrafine cellulose fibers, when a compound having a phosphorous acid group and/or a salt thereof and urea and/or a urea derivative are mixed into a cellulose raw material to obtain a phosphorous acid esterified cellulose raw material, the transparency of a dispersed solution containing ultrafine cellulose fibers having phosphorous acid groups can be enhanced by setting the decomposition percentage of the urea and/or the urea derivative to be a predetermined value or less.

Specifically, the present invention has the following configuration.

[1] A method for producing cellulose fibers, comprising:

mixing a compound having a phosphorous acid group and/or a salt thereof and urea and/or a urea derivative into a cellulose raw material to obtain a phosphorous acid esterified cellulose raw material, and

performing a fibrillation treatment on the phosphorous acid esterified cellulose raw material to obtain cellulose fibers having a fiber width of 1000 nm or less and having a phosphorous acid group or a phosphorous acid group-derived substituent, wherein

in obtaining the phosphorous acid esterified cellulose raw material, the decomposition percentage of the urea and/or the urea derivative is set to be 90% or less.

[2] The method for producing cellulose fibers according to [1], wherein, in obtaining the phosphorous acid esterified cellulose raw material, the ratio (N/P) between the substance amount P (mmol) of phosphorus atoms contained in the compound having a phosphorous acid group and/or a salt thereof and the substance amount N (mmol) of nitrogen atoms contained in the urea and/or the urea derivative is set to be 7.0 or more and 50 or less.

[3] The method for producing cellulose fibers according to [1] or [2], wherein the ratio (Q/P) between the substance amount P (mmol) of phosphorus atoms and the substance amount Q (mmol) of metal ions, contained in the compound having a phosphorous acid group and/or a salt thereof, is 1.0 or less.

[4] A cellulose fiber-dispersed solution comprising cellulose fibers having a fiber width of 1000 nm or less and having a phosphorus oxoacid group or a phosphorus oxoacid group-derived substituent, and a dispersion medium, wherein

when a first amount of dissociated acid in the cellulose fibers is set to be A1 and a total amount of dissociated acid in the cellulose fibers is set to be A2, the value of A1/A2 is 0.51 or more, and

when the content of the cellulose fibers in the cellulose fiber-dispersed solution is set to be 0.2% by mass, the total light transmittance is 93% or more.

[5] A cellulose fiber-dispersed solution comprising cellulose fibers having a fiber width of 1000 nm or less and having a phosphorous acid group or a phosphorous acid group-derived substituent, and a dispersion medium, wherein when the content of the cellulose fibers in the cellulose fiber-dispersed solution is set to be 0.2% by mass, the total light transmittance is 93% or more.

[6] The cellulose fiber-dispersed solution according to [4] or [5], wherein when the content of the cellulose fibers in the cellulose fiber-dispersed solution is set to be 0.4% by mass, the type B viscosity is 5000 mPa·s or more.

[7] A sheet comprising cellulose fibers having a fiber width of 1000 nm or less and having a phosphorus oxoacid group or a phosphorus oxoacid group-derived substituent, wherein

when a first amount of dissociated acid in the cellulose fibers is set to be A1 and a total amount of dissociated acid in the cellulose fibers is set to be A2, the value of A1/A2 is 0.51 or more, and

when the basis weight of the sheet is set to be 50 $g/m^2$, the haze is 20% or less.

[8] A sheet comprising cellulose fibers having a fiber width of 1000 nm or less and having a phosphorous acid group or a phosphorous acid group-derived substituent, wherein

when the basis weight of the sheet is set to be 50 $g/m^2$, the haze is 20% or less.

Advantageous Effects of Invention

According to the present invention, ultrafine cellulose fibers capable of enhancing the transparency of a dispersed solution comprising the ultrafine cellulose fibers having phosphorous acid groups can be obtained.

Brief Description of Drawings

Figure 1 is a graph showing the relationship between the amount of NaOH added dropwise to a slurry containing cellulose fibers having phosphorus oxoacid groups and a pH value.
Figure 2 is a light transmittance measurement spectrum of the ultrafine cellulose fiber-dispersed solution obtained in Production Example 6.

Embodiments of Carrying out the Invention

Hereinafter, the present invention will be described in detail. The explanation for components described below will be based on representative embodiments or specific examples; however, the present invention will not be limited to such embodiments.

(Cellulose fibers)

The present invention relates to a method for producing cellulose fibers having a phosphorus oxoacid group or a phosphorus oxoacid group-derived substituent and having a fiber width of 1000 nm or less. In addition, the present invention relates to a dispersed solution or a sheet, each comprising cellulose fibers having a phosphorus oxoacid group or a phosphorus oxoacid group-derived substituent and having a fiber width of 1000 nm or less. It is to be noted that, in the present description, cellulose fibers having a fiber width of 1000 nm or less is also referred to as "ultrafine cellulose fibers."

The fiber width of the cellulose fibers is 1000 nm or less. The fiber width of the cellulose fibers is preferably 100 nm or less, and more preferably 8 nm or less. Thereby, the dispersibility of the cellulose fibers in a solvent can be more effectively enhanced.

The fiber width of the cellulose fibers can be measured, for example, by electron microscopic observation. The average fiber width of the cellulose fibers is, for example, 1000 nm or less. For example, the average fiber width is preferably 2 nm or more and 1000 nm or less, more preferably 2 nm or more and 100 nm or less, further preferably 2 nm or more and 50 nm or less, and particularly preferably 2 nm or more and 10 nm or less. When the average fiber width of the cellulose fibers is set to be 2 nm or more, dissolution of the cellulose fibers as cellulose molecules in water is suppressed, and the effects of the cellulose fibers, such as the improvement of strength, rigidity, and dimensional stability, can be easily expressed. It is to be noted that the cellulose fibers are, for example, monofibrous cellulose.

The average fiber width of the cellulose fibers is measured as follows, for example, using an electron microscope. First, an aqueous suspension of the cellulose fibers having a concentration of 0.05% by mass or more and 0.1% by mass or less is prepared, and this suspension is casted onto a hydrophilized carbon film-coated grid as a sample for TEM observation. If the sample contains wide fibers, SEM images of the surface of the suspension casted onto glass may be observed. Subsequently, the sample is observed using electron microscope images taken at a magnification of 1000x, 5000x, 10000x, or 50000x, depending on the widths of fibers used as observation targets. However, the sample, the observation conditions, and the magnification are adjusted so as to satisfy the following conditions:

(1) A single straight line X is drawn in any given portion in an observation image, and 20 or more fibers intersect with the straight line X.
(2) A straight line Y, which intersects perpendicularly with the aforementioned straight line in the same image as described above, is drawn, and 20 or more fibers intersect with the straight line Y.

The widths of the fibers intersecting the straight line X and the straight line Y in the observation image meeting the above-described conditions are visually read. Three or more sets of observation images of surface portions, which are at least not overlapped, are obtained. Thereafter, the widths of the fibers intersecting the straight line X and the straight line Y are read in each image. Thereby, at least 120 fiber widths ($20 \text{ fibers} \times 2 \times 3 = 120$) are thus read. The average value of the read fiber widths is defined to be the average fiber width of the cellulose fibers.

The fiber length of the cellulose fibers is not particularly limited, and for example, it is preferably 0.1 μm or more and 1000 μm or less, more preferably 0.1 μm or more and 800 μm or less, and further preferably 0.1 μm or more and 600 μm or less. By setting the fiber length within the above-described range, destruction of the crystalline region of the cellulose fibers can be suppressed. In addition, the viscosity of a slurry of the cellulose fibers can also be set within an appropriate range. It is to be noted that the fiber length of the cellulose fibers can be obtained by an image analysis using TEM, SEM or AFM.

The cellulose fibers preferably have a type I crystal structure. Herein, the fact that the cellulose fibers have a

type I crystal structure may be identified by a diffraction profile obtained from a wide angle X-ray diffraction photograph using CuKα (λ = 1.5418 Å) monochromatized with graphite. Specifically, it may be identified based on the fact that there are typical peaks at two positions near 2θ = 14° or more and 17° or less, and near 2θ = 22° or more and 23° or less. The percentage of the type I crystal structure occupied in the ultrafine cellulose fibers is, for example, preferably 30% or more, more preferably 40% or more, and further preferably 50% or more. Thereby, more excellent performance can be expected, in terms of heat resistance and the expression of low linear thermal expansion. The crystallinity can be obtained by measuring an X-ray diffraction profile and obtaining it according to a common method (Seagal et al., Textile Research Journal, Vol. 29, p. 786, 1959).

The aspect ratio (fiber length/fiber width) of the cellulose fibers is not particularly limited, and for example, it is preferably 20 or more and 10000 or less, and more preferably 50 or more and 1000 or less. By setting the aspect ratio at the above-described lower limit value or more, a sheet comprising ultrafine cellulose fibers is easily formed. By setting the aspect ratio at the above-described upper limit or less, when the cellulose fibers are treated, for example, in the form of a dispersed solution, operations such as dilution are preferably easily handled.

The cellulose fibers in the present embodiment have, for example, both a crystalline region and an amorphous region. In particular, ultrafine cellulose fibers, which have both a crystalline region and an amorphous region and also have a high aspect ratio, are realized by the after-mentioned method for producing ultrafine cellulose fibers.

The cellulose fibers have a phosphorus oxoacid group or a phosphorus oxoacid group-derived substituent (hereinafter simply referred to as a "phosphorus oxoacid group" at times). The amount of phosphorus oxoacid groups introduced into the cellulose fibers (the amount of phosphorus oxoacid groups) is, per 1 g (mass) of the cellulose fibers, preferably 0.10 mmol/g or more, more preferably 0.20 mmol/g or more, further preferably 0.50 mmol/g or more, and particularly preferably 1.00 mmol/g or more. On the other hand, the amount of phosphorus oxoacid groups introduced into the cellulose fibers is, for example, per 1 g (mass) of the cellulose fibers, preferably 5.20 mmol/g or less, more preferably 3.65 mmol/g or less, and further preferably 3.00 mmol/g or less. Herein, the unit mmol/g indicates the amount of substituents per 1 g (mass) of the cellulose fibers, when the counterions of the phosphorus oxoacid groups are hydrogen ions ($H^+$). By setting the amount of phosphorus oxoacid groups introduced within the above-described range, it may become easy to perform fibrillation on the fiber raw material, and the stability of the cellulose fibers can be enhanced. Furthermore, by setting the amount of phosphorus oxoacid groups introduced within the above-described range, the dispersibility of the cellulose fibers in a solvent can be more effectively enhanced.

The amount of phosphorus oxoacid groups introduced into the cellulose fibers can be measured, for example, by a neutralization titration method. According to the measurement by the neutralization titration method, while an alkali such as a sodium hydroxide aqueous solution is added to a slurry containing the obtained cellulose fibers, a change in the pH is obtained, so that the introduced amount is measured.

Figure 1 is a graph showing the relationship between the amount of NaOH added dropwise to a slurry containing cellulose fibers having phosphorus oxoacid groups and a pH value. The amount of phosphorus oxoacid groups introduced into the cellulose fibers is measured, for example, as follows.

First, a slurry containing the cellulose fibers is treated with a strongly acidic ion exchange resin. Before the treatment with the strongly acidic ion exchange resin, the same defibration treatment as the after-mentioned defibration treatment step may be performed on the cellulose fibers, as necessary.

Subsequently, while adding a sodium hydroxide aqueous solution, a change in the pH value is observed, and a titration curve as shown in the upper portion of Figure 1 is obtained. In the titration curve shown in the upper portion of Figure 1, a pH value measured with respect to the amount of alkali added is plotted. On the other hand, in the titration curve shown in the lower portion of Figure 1, an increment (a derivative) (1/mmol) of the pH value with respect to the amount of alkali added is plotted. According to this neutralization titration, in a curve formed by plotting pH values measured with respect to the amount of alkali added, two points are confirmed, in which an increment (a derivative of pH with respect to the amount of alkali added dropwise) becomes maximum. Regarding these two points, a maximum point of an increment firstly obtained after addition of alkali is referred to as a first end point, whereas a maximum point of an increment subsequently obtained after addition of alkali is referred to as a second end point. The amount of alkali required from initiation of the titration until the first end point becomes equal to the first amount of dissociated acid in the cellulose fibers comprised in the slurry used in the titration. The amount of alkali required from the first end point until the second end point becomes equal to the second amount of dissociated acid in the cellulose fibers comprised in the slurry used in the titration. Furthermore, the amount of alkali required from initiation of the titration until the second end point becomes equal to the total amount of dissociated acid in the slurry used in the titration. Further, the value obtained by dividing the amount of alkali required from initiation of the titration until the first end point by a solid content (g) in the slurry to be titrated becomes the amount of phosphorus oxoacid groups introduced (mmol/g). Besides, the simple term "the amount of the phosphorus oxoacid groups introduced (or the amount of the phosphorus oxoacid groups)" refers to the first amount of dissociated acid.

In Figure 1, the region ranging from initiation of the titration until the first end point is referred to as a first region, and the region ranging from the first end point until the second end point is referred to as a second region. For example,

when the phosphorus oxoacid groups are phosphoric acid groups causing condensation, the amount of weakly acidic groups in the phosphorus oxoacid groups (which is also referred to as a "second amount of dissociated acid" in the present description) is apparently reduced, so that the amount of the alkali required for the second region is decreased as compared with the amount of the alkali required for the first region. Meanwhile, the amount of strongly acidic groups in the phosphorus oxoacid groups (which is also referred to as a "first amount of dissociated acid" in the present description) corresponds to the amount of phosphorus atoms, regardless of the presence or absence of condensation. On the other hand, when the phosphorus oxoacid groups are phosphorous acid groups, since weakly acidic groups are not present in the phosphorus oxoacid groups, the amount of the alkali required for the second region may be decreased, or the amount of the alkali required for the second region may become zero in some cases. In such a case, in the titration curve, there is only one point in which an increment of the pH value becomes maximum.

In the measurement of the amount of phosphorus oxoacid groups according to the titration method, when the amount of a single droplet of a sodium hydroxide aqueous solution added dropwise is too large, or when the titration interval is too short, the amount of phosphorus oxoacid groups may be measured to be lower than the actual value and thus, a precise value may not be obtained in some cases. With regard to an appropriate amount of a sodium hydroxide aqueous solution added dropwise and a titration interval, it is desired that, for example, a 0.1 N sodium hydroxide aqueous solution is titrated in each amount of 10 to 50 μL for 5 to 30 seconds. Moreover, in order to eliminate the influence of carbon dioxide dissolved in a cellulose fiber-containing slurry, it is desired that, for example, the measurement is carried out, while inert gas such as nitrogen gas is blown into the slurry from 15 minutes before initiation of the titration until termination of the titration.

When the first amount of dissociated acid in the cellulose fibers is set to be A1 and the total amount of dissociated acid in the cellulose fibers is set to be A2, the value of A1/A2 is preferably 0.51 or more, more preferably 0.64 or more, and further preferably 0.80 or more. Moreover, the upper limit value of the value of A1/A2 is preferably 1.0. Herein, the first amount of dissociated acid (A1) in the cellulose fibers is a value obtained by dividing the amount (mmol) of alkali necessary from initiation of the titration until the first end point by the solid content (g) in the slurry to be titrated in the above-mentioned titration curve. That is to say, the first amount of dissociated acid (A1) is a value obtained by dividing the substance amount (mmol) of acid ionized and neutralized at the first stage by the solid content (g) in the slurry to be titrated. On the other hand, the total amount of dissociated acid (A2) in the cellulose fibers is a value obtained by dividing the amount (mmol) of alkali necessary from initiation of the titration until the second end point by the solid content (g) in the slurry to be titrated. That is to say, the total amount of dissociated acid (A2) is a value obtained by dividing the substance amount (mmol) of total acids ionized and neutralized in all of the stages by the solid content (g) in the slurry to be titrated. Hence, as the value of A1/A2 gets close to 1, it means that the amount of weak acid (for example, the amount of weakly acidic groups in phosphorus oxoacid groups) becomes small and that the cellulose fibers are substituted with phosphorous acid groups. Also, in a case where the cellulose fibers have phosphoric acid groups causing condensation, it is assumed that the value of A1/A2 gets close to 1. However, since aggregation of the cellulose fibers occurs due to the condensation of the phosphoric acid groups, transparency of a dispersed solution obtained by dispersion of the cellulose fibers is reduced, and the viscosity of the dispersed solution is also reduced. As described later, since the cellulose fiber-dispersed solution obtained in the present invention is highly transparent, if the value of A1/A2 is within the above-described range, it means that the cellulose fibers are substituted with phosphorous acid groups.

Besides, the value of A1/A2 gets close to 1 in the following two cases, namely, in a case where phosphoric acid groups are condensed, and in a case where phosphorous acid groups are present. Examples of a method of determining whether the factor by which A1/A2 gets close to 1 is the condensation of phosphoric acid groups or the presence of phosphorous acid groups may include: a method of performing the above-described titration operations, after a treatment of cleaving the condensation structure of phosphoric acid, such as acid hydrolysis, has been performed; and a method of performing the above-described titration operations, after a treatment of converting phosphorous acid groups to phosphoric acid groups, such as an oxidation treatment, has been performed.

The phosphorus oxoacid group is a substituent represented by, for example, the following formula (1). The phosphorus oxoacid group may also be a substituent derived from the phosphorus oxoacid group. Examples of the substituent derived from the phosphorus oxoacid group may include salts of the phosphorus oxoacid groups and substituents such as a phosphorus oxoacid ester group. Moreover, the substituent derived from the phosphorus oxoacid group may also include a group obtained by condensation of the phosphorus oxoacid group (for example, a pyrophosphoric acid group).

[Formula 1]

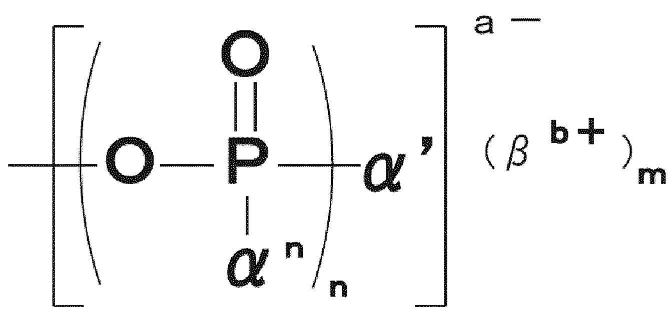

(1)

In the above Formula (1), a, b, and n each represent a natural number, and m represents any given number (provided that $a = b \times m$); an "a" number of $\alpha^1$, $\alpha^2$, ..., $\alpha^n$ and $\alpha'$ is $O^-$, and the rest is either R or OR. Herein, R each represents a hydrogen atom, a saturated straight chain hydrocarbon group, a saturated branched chain hydrocarbon group, a saturated cyclic hydrocarbon group, an unsaturated straight chain hydrocarbon group, an unsaturated branched chain hydrocarbon group, an unsaturated cyclic hydrocarbon group, an aromatic group, or a derivative group thereof. R may also be a group derived from a cellulose molecular chain. Among others, either $\alpha^n$ or $\alpha'$ is preferably R, and R is particularly preferably a hydrogen atom. In addition, n is preferably 1. That is, the phosphorus oxoacid group is preferably a phosphorous acid group. Besides, the phosphorous acid group may also be a substituent derived from the phosphorous acid group.

In one embodiment of the present invention, the cellulose fibers have a phosphorous acid group or a phosphorous acid group-derived substituent (hereinafter simply referred to as a "phosphorous acid group" at times). That is, in the formula (1), an a number of $\alpha^n$ or $\alpha'$ is $O^-$, and either $\alpha^n$ or $\alpha'$ is R. Among others, R is preferably a hydrogen atom.

It is to be noted that some phosphorus oxoacid groups or phosphorus oxoacid group-derived substituents may be phosphoric acid groups or phosphoric acid group-derived substituents. The phosphoric acid groups may also be groups obtained by condensation of the phosphorus oxoacid groups (for example, pyrophosphoric acid groups).

Examples of the saturated straight chain hydrocarbon group represented by R in the formula (1) may include a methyl group, an ethyl group, an n-propyl group, and an n-butyl group, but are not particularly limited thereto. Examples of the saturated branched chain hydrocarbon group may include an i-propyl group and a t-butyl group, but are not particularly limited thereto. Examples of the saturated cyclic hydrocarbon group may include a cyclopentyl group and a cyclohexyl group, but are not particularly limited thereto. Examples of the unsaturated straight chain hydrocarbon group may include a vinyl group and an allyl group, but are not particularly limited thereto. Examples of the unsaturated branched chain hydrocarbon group may include an i-propenyl group and a 3-butenyl group, but are not particularly limited thereto. Examples of the unsaturated cyclic hydrocarbon group may include a cyclopentenyl group and a cyclohexenyl group, but are not particularly limited thereto. Examples of the aromatic group may include a phenyl group and a naphthyl group, but are not particularly limited thereto.

Moreover, examples of the derivative group of the R may include functional groups such as a carboxyl group, a hydroxyl group or an amino group, in which at least one type selected from the functional groups is added to or substituted with the main chain or side chain of the above-described various types of hydrocarbon groups, but are not particularly limited thereto. Furthermore, the number of carbon atoms constituting the main chain of the above-described R is not particularly limited, and it is preferably 20 or less, and more preferably 10 or less. By setting the number of carbon atoms constituting the main chain of the R within the above-described range, the molecular weight of phosphorus oxoacid groups can be adjusted within a suitable range, permeation thereof into a fiber raw material can be facilitated, and the yield of the ultrafine cellulose fibers can also be enhanced.

$\beta^{b+}$ is a mono- or more-valent cation composed of an organic or inorganic matter. Examples of the mono- or more-valent cation composed of an organic matter may include an aliphatic ammonium and an aromatic ammonium, and examples of the mono- or more-valent cation composed of an inorganic matter may include alkali metal ions such as sodium, potassium or lithium ions, divalent metal cations such as calcium or magnesium ions, and hydrogen ions, but are not particularly limited thereto. These can be applied alone as a single type or in combination of two or more types. As such mono- or more-valent cations composed of an organic or inorganic matter, sodium or potassium ions, which hardly cause the yellowing of a fiber raw material containing $\beta$ upon heating and are industrially easily applicable, are preferable, but are not particularly limited thereto.

Whether the cellulose fibers have phosphorous acid groups as substituents can be confirmed by measuring the infrared absorption spectrum of a dispersed solution containing the cellulose fibers, and then observing absorption based on phosphonic acid groups as tautomers of phosphorous acid groups, P = O, around 1210 $cm^{-1}$. Moreover,

whether the cellulose fibers have phosphorous acid groups as substituents can also be confirmed by a method of confirming a chemical shift using NMR or a method of combining an elemental analysis with various types of titration methods.

The cellulose fibers may have other anionic groups, in addition to the phosphorus oxoacid groups or the phosphorus oxoacid group-derived substituents. An example of such an anionic group may be a carboxy group originally comprised in pulp.

The cellulose fibers may have a carbamide group derived from urea and/or a urea derivative that is added in the after-mentioned step of producing cellulose fibers. In this case, the amount of carbamide groups introduced into the cellulose fibers (the amount of carbamide groups) is, for example, per 1 g (mass) of the cellulose fibers, preferably 1.50 mmol/g or less, more preferably 1.00 mmol/g or less, further preferably 0.30 mmol/g or less, and particularly preferably 0.20 mmol/g or less. Also, the amount of carbamide groups introduced into the cellulose fibers (the amount of carbamide groups) may be 0.00 mmol/g. Carbamide groups and phosphorus oxoacid groups are groups that are introduced by reaction with the hydroxyl groups of cellulose. Thus, as the amount of the carbamide groups introduced increases, the amount of the phosphorus oxoacid groups introduced decreases. Hence, by setting the amount of the carbamide groups introduced within the above-described range, the amount of the phosphorus oxoacid groups introduced can be increased and can be set within an appropriate range. Besides, since the carbamide groups themselves do not have electrical conductivity, the charge repulsion effect (cellulose fiber fibrillation effect) cannot be obtained by introduction of the carbamide groups. As such, by setting the amount of the carbamide groups introduced within the above-described range, the amount of the phosphorus oxoacid groups introduced can be enhanced. As a result, the dispersibility of the cellulose fibers in a solvent can be more effectively enhanced, so that an ultrafine cellulose fiber-containing dispersed solution having high transparency can be easily obtained.

The amount of the carbamide groups introduced can be determined by measuring the amount of nitrogen covalently binding to the cellulose fibers. Specifically, ionic nitrogen (ammonium ions) is released and eliminated from a measurement target comprising cellulose fibers, and the amount of nitrogen is then measured according to a trace nitrogen analysis method. The release of ionic nitrogen (ammonium ions) is carried out under conditions in which nitrogen covalently binding to cellulose is not substantially removed. For example, after completion of a phosphorus oxoacid group introduction step, ammonium ions may be released by an alkali treatment, and may be eliminated by washing, followed by performing a defibration treatment. Otherwise, after completion of a defibration treatment step, ammonium ions may be adsorbed with a strongly acidic ion exchange resin. As a device of measuring the amount of nitrogen according to a trace nitrogen analysis method, for example, the trace total nitrogen analysis device TN-110 manufactured by Mitsubishi Chemical Analytech Co., Ltd. can be used. Before the measurement, the cellulose fibers are dried at a low temperature (for example, in a vacuum dryer, at 40°C for 24 hours), so that they become absolute dried. The amount of the carbamide groups introduced (mmol/g) per unit mass of the cellulose fibers is calculated by dividing the content (g/g) of nitrogen per unit mass of the cellulose fibers obtained by the trace nitrogen analysis, by the atomic weight of nitrogen.

Since the cellulose fibers are obtained through the after-mentioned production step, when the cellulose fibers are dispersed in a dispersion medium to prepare a dispersed solution thereof, a highly transparent dispersed solution can be obtained. In addition, when a molded body such as, for example, a sheet is formed using such a dispersion medium, a highly transparent sheet can be obtained. Thus, the cellulose fibers are preferably cellulose fibers for use in preparation of a dispersed solution, and may also be cellulose fibers for use in preparation of a molded body.

(Method for producing cellulose fibers)

The present invention relates to a method for producing cellulose fibers. The method for producing cellulose fibers comprises a step of mixing a compound having a phosphorous acid group and/or a salt thereof and urea and/or a urea derivative into a cellulose raw material to obtain a phosphorous acid esterified cellulose raw material, and a step of performing a fibrillation treatment on the phosphorous acid esterified cellulose raw material to obtain cellulose fibers having a fiber width of 1000 nm or less and having a phosphorous acid group or a phosphorous acid group-derived substituent. In the step of obtaining the phosphorous acid esterified cellulose raw material, the decomposition percentage of the urea and/or the urea derivative is set to be 90% or less. It is to be noted that hereinafter, the step of obtaining a phosphorous acid esterified cellulose raw material is also referred to as a phosphorus oxoacid group introduction step. In addition, the step of obtaining cellulose fibers having a fiber width of 1000 nm or less and having a phosphorous acid group is also referred to as a defibration treatment step.

In the method for producing cellulose fibers of the present invention, a compound having a phosphorous acid group and/or a salt thereof and urea and/or a urea derivative are mixed into a cellulose raw material. Herein, carboxyl groups and amino groups possessed by the urea form hydrogen bonds with phosphorous acid groups possessed by the compound having the phosphorous acid groups, so that ionization of hydrogen ions is suppressed. On the other hand, since the urea is decomposed by heat or the like, if it is decomposed, it is released as carbon dioxide gas or

ammonia gas to the outside of the reaction system. In the method for producing cellulose fibers of the present invention, the hydrogen bonds between urea and phosphorous acid groups can be retained by suppressing the decomposition percentage of the urea and/or the urea derivative to 90% or less, and thereby, ionization of hydrogen ions from the phosphorous acid groups can be suppressed. Besides, since the pKa value of phosphorous acid is smaller than the pKa value of phosphoric acid, the hydrogen ions of phosphorous acid groups are easily ionized, and thereby, it is considered that the acidity increases in the reaction system, and that deterioration of the cellulose fibers, decomposition of the urea, and the like are easily promoted. However, in the present invention, by suppressing the decomposition percentage of the urea and/or the urea derivative to 90% or less, ionization of hydrogen ions can be suppressed even in the cellulose fibers having phosphorous acid groups, and as a result, deterioration of the cellulose fibers, etc. can be suppressed.

< Cellulose raw material >

Ultrafine cellulose fibers are produced from a fiber raw material comprising cellulose (a cellulose raw material). Such a fiber raw material comprising cellulose is not particularly limited, and pulp is preferably used from the viewpoint of availability and inexpensiveness. Examples of the pulp may include wood pulp, non-wood pulp, and deinked pulp. Examples of the wood pulp may include, but are not particularly limited to, chemical pulps such as leaf bleached kraft pulp (LBKP), needle bleached kraft pulp (NBKP), sulfite pulp (SP), dissolving pulp (DP), soda pulp (AP), unbleached kraft pulp (UKP), and oxygen bleached kraft pulp (OKP); semichemical pulps such as semichemical pulp (SCP) and chemi-ground wood pulp (CGP); and mechanical pulps such as ground pulp (GP) and thermomechanical pulp (TMP, BCTMP). Examples of the non-wood pulp may include, but not particularly limited to, cotton pulps such as cotton linter and cotton lint; and non-wood type pulps such as hemp, wheat straw, and bagasse. An example of a deinked pulp may be, but is not particularly limited to, a deinked pulp using waste paper as a raw material. The pulp of the present embodiment may be used alone as a single type, or in combination of two or more types. Among the above-described pulps, for example, wood pulp and deinked pulp are preferable from the viewpoint of easy availability. Moreover, among wood pulps, for example, chemical pulp is more preferable, and kraft pulp and sulfite pulp are further preferable, from the viewpoint that it has a higher cellulose content ratio so as to enhance the yield of ultrafine cellulose fibers upon the defibration treatment, and that decomposition of cellulose in the pulp is mild, so that ultrafine cellulose fibers having a long fiber length with a high aspect ratio can be obtained. It is to be noted that if such ultrafine cellulose fibers having a long fiber length with a high aspect ratio is used, the viscosity tends to become high.

As a fiber raw material comprising cellulose, for example, cellulose comprised in Ascidiacea, or bacterial cellulose generated by acetic acid bacteria can also be utilized. In addition, fibers formed from straight-chain nitrogen-containing polysaccharide polymers such as chitin and chitosan can also be used, instead of a fiber raw material containing cellulose.

< Phosphorus oxoacid group introduction step (phosphorous acid group introduction step)>

The phosphorus oxoacid group introduction step (phosphorous acid group introduction step) is a step of mixing a compound having a phosphorous acid group and/or a salt thereof and urea and/or a urea derivative into a cellulose raw material to obtain a phosphorous acid esterified cellulose raw material. In the phosphorus oxoacid group introduction step, hydroxyl groups possessed by the fiber raw material comprising cellulose react with the compound having a phosphorous acid group and/or a salt thereof, so that phosphorus oxoacid groups including phosphorous acid groups can be introduced into the cellulose raw material. By this step, a phosphorous acid esterified cellulose raw material can be obtained. It is to be noted that, in the present description, the compound having phosphorous acid and/or a salt thereof is also referred to as Compound A, whereas the urea and/or the urea derivative is also referred to as Compound B.

One example of the method of allowing Compound A to act on the fiber raw material in the presence of Compound B may include a method of mixing Compound A and Compound B into the fiber raw material that is in a dry or wet state, or in a slurry state. Among the fiber raw materials in these states, because of the high uniformity of the reaction, the fiber raw material that is in a dry or wet state is preferably used, and the fiber raw material in a dry state is particularly preferably used. The shape of the fiber raw material is not particularly limited, and for example, a cotton-like or thin sheet-like fiber raw material is preferable. Compound A and Compound B may be added to the fiber raw material by the method of adding Compound A and Compound B that are powdered, are dissolved in a solvent to form a solution, or are melted by being heated to a melting point or higher. Among these, because of the high uniformity of the reaction, the compounds are preferably added to the fiber raw material, in the form of a solution obtained by dissolution thereof in a solvent, or in particular, in the form of an aqueous solution. Moreover, Compound A and Compound B may be simultaneously added, or may also be added, separately. Alternatively, Compound A and Compound B may be added in the form of a mixture thereof. The method of adding Compound A and Compound B is not particularly limited, and in a case where Compound A and Compound B are in the form of a solution, the fiber raw material may be immersed in

the solution for liquid absorption, and may be then removed therefrom, or the solution may also be added dropwise onto the fiber raw material. Otherwise, Compound A and Compound B in necessary amounts may be added to the fiber raw material, or Compound A and Compound B in excessive amounts may be added to the fiber raw material and then, may be squeezed or filtrated to remove redundant Compound A and Compound B.

Compound A used in the present embodiment comprises, at least, a compound having a phosphorous acid group and/or a salt thereof. The compound having a phosphorous acid group may be phosphorous acid, and the phosphorous acid may be, for example, 99% phosphorous acid (phosphonic acid). Examples of the salt of the compound having a phosphorous acid group may include a lithium salt, a sodium salt, a potassium salt, and an ammonium salt of phosphorous acid, and these salts may have various degrees of neutralization. Among these, from the viewpoint of achieving high efficiency in introduction of phosphorus oxoacid groups, an improving tendency of the defibration efficiency in the after-mentioned defibration step, low costs, and industrial applicability, phosphorous acid, a sodium salt of phosphorous acid, a potassium salt of phosphorous acid, or an ammonium salt of phosphorous acid is preferably used. Among others, the compound having a phosphorous acid group and/or a salt thereof is preferably a compound having a phosphorous acid group, and more preferably phosphorous acid.

Besides, Compound A may comprise a compound having a phosphoric acid group and/or a salt thereof, dehydrated condensed phosphoric acid or a salt thereof, phosphoric anhydride (diphosphorus pentoxide), and the like, in addition to the compound having a phosphorous acid group and/or a salt thereof. In this case, as such phosphoric acid, those having various purities can be used, and for example, 100% phosphoric acid (orthophosphoric acid) or 85% phosphoric acid can be used. Dehydrated condensed phosphoric acid is phosphoric acid that is condensed by two or more molecules according to a dehydration reaction, and examples of such dehydrated condensed phosphoric acid may include pyrophosphoric acid and polyphosphoric acid.

The ratio (Q/P) between the substance amount P (mmol) of phosphorus atoms and the substance amount Q (mmol) of metal ions, contained in the compound having a phosphorous acid group and/or a salt thereof, is preferably 1.0 or less, more preferably less than 1.0, and further preferably 0.5 or less. When the compound having a phosphorous acid group and/or a salt thereof comprises a metal ion, the compound having a phosphorous acid group and/or a salt thereof comprises the salt of the compound having a phosphorous acid group. On the other hand, when the value of Q/P is 0, the compound having a phosphorous acid group and/or a salt thereof is a compound having a phosphorous acid group, and is preferably phosphorous acid. Even in a case where the compound having a phosphorous acid group and/or a salt thereof is the salt of the compound having a phosphorous acid group and where the salt of the compound having a phosphorous acid group has a metal ion, the hydrogen bond formed between urea and phosphorus oxoacid can be set to have an appropriate strength by setting the value of Q/P within the above-described range, and as a result, the phosphorus oxoacid easily infiltrates into cellulose, such that it is induced by the urea that functions to swell the cellulose. Thereby, the transparency of the ultrafine cellulose fibers can be further enhanced.

The value of Q/P can be adjusted by using a reagent whose Q/P value has been known. For example, in the case of phosphorous acid, the value of Q/P is 0, whereas in the case of monosodium hydrogen phosphite, the value of Q/P is 1. When these two substances are mixed with each other at a ratio of 1 : 1, the value of Q/P becomes 0.5. When the value of Q/P of a substance is unknown, the composition thereof may be clarified by an appropriate elemental analysis method, and the value may be then calculated.

The amount of Compound A added to the fiber raw material is not particularly limited, and for example, if the amount of the Compound A added is converted to a phosphorus atomic weight, the amount of phosphorus atoms added with respect to the fiber raw material (absolute dry mass) is preferably 0.5% by mass or more and 100% by mass or less, more preferably 1% by mass or more and 50% by mass or less, and further preferably 2% by mass or more and 30% by mass or less. By setting the amount of phosphorus atoms added to the fiber raw material within the above-described range, the yield of the ultrafine cellulose fibers can be further improved. On the other hand, by setting the amount of phosphorus atoms added to the fiber raw material to the above-described upper limit value or less, the balance between the effect of improving the yield and costs can be kept.

Compound B used in the present embodiment is urea and a urea derivative, as described above. Examples of Compound B may include urea, biuret, 1-phenyl urea, 1-benzyl urea, 1-methyl urea, and 1-ethyl urea. From the viewpoint of the improvement of the uniformity of the reaction, Compound B is preferably used in the form of an aqueous solution. Moreover, from the viewpoint of the further improvement of the uniformity of the reaction, an aqueous solution, in which both Compound A and Compound B are dissolved, is preferably used.

The pH of an aqueous solution, in which both Compound A and Compound B are dissolved, is preferably pH 7 or less, more preferably pH 5 or less, and further preferably pH 3 or less. By setting the pH of the aqueous solution, in which both Compound A and Compound B are dissolved, within the above-described range, the speed of introducing phosphorus oxoacid groups can be increased in the phosphorus oxoacid group introduction step, and as a result, the amount of the carbamide groups introduced can be suppressed. Thereby, the transparency of the ultrafine cellulose fibers can be further enhanced. Besides, the pH of the aqueous solution, in which both Compound A and Compound B are dissolved, is a value measured in a state in which the molarity of Compound A in water (i.e., a value obtained by

dividing the substance amount (mole) of Compound A by the mass of water) is 2.5 to 3.0 mmol/g.

The amount of Compound B added to the fiber raw material (absolute dry mass) is not particularly limited, and for example, it is preferably 1% by mass or more and 500% by mass or less, more preferably 10% by mass or more and 400% by mass or less, and further preferably 100% by mass or more and 350% by mass or less.

When the substance amount (mmol) of phosphorus atoms comprised in Compound A is defined as P and the substance amount (mmol) of nitrogen atoms contained in the urea and/or the urea derivative comprised in Compound B is defined as N, the value of N/P is preferably 7.0 or more, more preferably 8.0 or more, further preferably 9.0 or more, and particularly preferably 10.0 or more. On the other hand, the value of N/P is preferably 50 or less. By setting the value of N/P within the above-described range, the decomposition percentage of the urea and/or the urea derivative can be easily controlled to be 90% or less in the step of obtaining the phosphorous acid esterified cellulose raw material.

In the reaction of the fiber raw material comprising cellulose with Compound A, for example, amides or amines, as well as Compound B, may be comprised in the reaction system. Examples of the amides may include formamide, dimethylformamide, acetamide, and dimethylacetamide. Examples of the amines may include methylamine, ethylamine, trimethylamine, triethylamine, monoethanolamine, diethanolamine, triethanolamine, pyridine, ethylenediamine, and hexamethylenediamine. Among these, particularly, triethylamine is known to work as a favorable reaction catalyst.

In the phosphorus oxoacid group introduction step, after Compound A, etc. has been added or mixed into the fiber raw material, a heat treatment is preferably performed on the fiber raw material. As a temperature for such a heat treatment, it is preferable to select a temperature that enables an efficient introduction of phosphorous acid groups, while suppressing the thermal decomposition or hydrolysis reaction of fibers and the thermal decomposition of urea. Although the heat treatment temperature may change depending on the selection of a heating time and a heat source, it is preferably 50°C or higher, more preferably 100°C or higher, and further preferably 130°C or higher. On the other hand, the heat treatment temperature is preferably 250°C or lower, and more preferably 175°C or lower. In addition, apparatuses having various heating media can be utilized in the heat treatment, and examples of such an apparatus may include a stirring dryer, a rotary dryer, a disk dryer, a roll-type heater, a plate-type heater, a fluidized bed dryer, an airborne dryer, a vacuum dryer, an infrared heating device, a far-infrared heating device, a microwave heating device, and a high-frequency drying device.

In the heat treatment according to the present embodiment, a method comprising adding Compound A to a thin sheet-like fiber raw material by impregnation or the like, and then heating the fiber raw material, or a method comprising heating a fiber raw material, while kneading or stirring the fiber raw material and Compound A using a kneader or the like, can be adopted. Thereby, the unevenness in the concentration of the Compound A in the fiber raw material can be suppressed, and phosphorous acid groups can be more uniformly introduced into the surface of the cellulose fibers comprised in the fiber raw material. This is considered because, when water molecules move to the surface of the fiber raw material as drying advances, Compound A dissolved therein is attracted to the water molecules due to surface tension and as a result, Compound A also moves to the surface of the fiber raw material (specifically, the unevenness in the concentration of the Compound A occurs), and because such a phenomenon can be suppressed by adopting the aforementioned method.

As a heating device used for the heat treatment, for example, a device capable of always discharging moisture retained by slurry or moisture generated by the dehydration condensation (phosphoric acid esterification) reaction of Compound A with hydroxyl groups, etc. comprised in cellulose or the like in the fiber raw material, to the outside of the device system, is preferable. Such a heating device may be, for example, a ventilation-type oven. By always discharging moisture from the device system, in addition to being able to suppress a hydrolysis reaction of phosphoric acid ester bonds, which is a reverse reaction of the phosphoric acid esterification, the acid hydrolysis of sugar chains in the fibers may also be suppressed. Thus, it becomes possible to obtain ultrafine cellulose fibers with a high axial ratio.

The time for the heat treatment is preferably 10 seconds or more, more preferably 50 seconds or more, further preferably 100 seconds or more, still further preferably 150 seconds or more, and particularly preferably 200 seconds or more, after moisture has been substantially removed from the fiber raw material. On the other hand, the time for the heat treatment is preferably 1200 seconds or less, more preferably 1000 seconds or less, and further preferably 800 seconds or less. In the present embodiment, by setting the heating temperature and the heating time within an appropriate range, the amount of phosphorous acid groups introduced can be set within a preferred range. Moreover, in the present embodiment, by setting the heating temperature and the heating time within an appropriate range, the decomposition percentage of the urea and/or the urea derivative can be easily controlled within an appropriate range.

The phosphorus oxoacid group introduction step may be performed at least once, but may also be repeated two or more times. By performing the phosphorus oxoacid group introduction step two or more times, many phosphorous acid groups can be introduced into the fiber raw material.

In the method for producing cellulose fibers of the present invention, the decomposition percentage of the urea and/or the urea derivative is set to be 90% or less in the phosphorus oxoacid group introduction step. The decomposition percentage of the urea and/or the urea derivative in the phosphorus oxoacid group introduction step is preferably 85% or less, more preferably 80% or less, further preferably 75% or less, and particularly preferably 70% or less. The lower

limit value of the decomposition percentage of the urea and/or the urea derivative in the phosphorus oxoacid group introduction step is not particularly limited, and it is preferably 10% or more. Herein, the decomposition percentage of urea is a value obtained by dividing a reduction in the mass other than water evaporation (i.e., the amount of urea decomposed) in the phosphorus oxoacid introduction step (in particular, heating) by the mass of the urea added to the cellulose raw material, and then expressing the obtained value with a mass fraction. Since urea is decomposed by heat or the like and is then released as carbon dioxide gas or ammonia gas to the outside of the reaction system, the decomposition percentage of the urea is calculated according to the following method.

First, the absolute dry mass of a cellulose raw material (pulp) used in the test is measured. Subsequently, a predetermined amount of chemical solution is added to the cellulose raw material (pulp), and the mass (mo) is then measured. From the composition of the chemical solution and the initial water content rate of the pulp, the amount of water added (the water amount in the system) ($m_w$) and the amount of urea added ($m_u$) are calculated. Thereafter, the impregnated cellulose raw material (pulp) is subjected to a heat treatment under the aforementioned heat treatment conditions, and the mass (mi) is then measured. Using the measured and calculated masses, the decomposition percentage of the urea [%] is calculated according to the following (formula 1):

$$\text{Decomposition percentage of urea [\%]} = (m_0 - m_w - m_1) / m_u \times 100 \ldots \text{(Formula 1).}$$

mo: Mass of chemical solution-impregnated pulp before heating
$m_w$: Amount of water added (water amount in system)
mi: Mass of pulp after heating
mu: Amount of urea added

In the method for producing cellulose fibers of the present invention, by controlling the decomposition percentage of the urea and/or the urea derivative in the phosphorus oxoacid group introduction step so as to achieve the above-described conditions, the transparency of a dispersed solution, in which the produced cellulose fibers are dispersed, can be enhanced. Moreover, by controlling the decomposition percentage of the urea and/or the urea derivative in the phosphorus oxoacid group introduction step so as to achieve the above-described conditions, a sheet comprising the cellulose fibers and having high transparency can be formed. Furthermore, in the method for producing cellulose fibers of the present invention, the dispersibility of the produced cellulose fibers can also be enhanced, and thereby, the viscosity of the obtained dispersed solution can also be enhanced. In order to control the decomposition percentage of the urea and/or the urea derivative to predetermined conditions, for example, the additive amount of a compound having a phosphorous acid group and/or a salt thereof and the additive amount of urea and/or a urea derivative may be appropriately controlled in the phosphorus oxoacid group introduction step, or the time required for the heat treatment or the temperature required for the heat treatment may be controlled in the phosphorus oxoacid group introduction step. Otherwise, the decomposition percentage of the urea and/or the urea derivative may also be fluctuated even by adjusting the pH of a chemical solution used in the phosphorus oxoacid group introduction step to be within a predetermined range. However, for example, the adjustment of bringing the pH value close to the neutral range hardly decreases the decomposition percentage and also, at the same time, the speed of introducing phosphorus oxoacid becomes slow. Thus, consequently, the decomposition percentage is not decreased in some cases.

< Washing step >

In the method for producing ultrafine cellulose fibers according to the present embodiment, a washing step may be performed on the phosphorus oxoacid group-introduced fibers, as necessary. The washing step is carried out by washing the phosphorus oxoacid group-introduced fibers, for example, with water or an organic solvent. In addition, the washing step may be performed after each step as described below, and the number of washing operations performed in each washing step is not particularly limited.

< Alkali treatment step >

When the ultrafine cellulose fibers are produced, an alkali treatment may be performed on the phosphorus oxoacid group-introduced fibers between the phosphorus oxoacid group introduction step and a defibration treatment step as described below. The method of the alkali treatment is not particularly limited. For example, a method of immersing the phosphorus oxoacid group-introduced fibers in an alkaline solution may be applied.

The alkali compound contained in the alkaline solution is not particularly limited, and it may be an inorganic alkaline compound or an organic alkali compound. In the present embodiment, because of high versatility, for example,

sodium hydroxide or potassium hydroxide is preferably used as an alkaline compound. In addition, the solvent contained in the alkaline solution may be either water or an organic solvent. Among others, the solvent contained in the alkaline solution is preferably water, or a polar solvent including a polar organic solvent such as alcohol, and is more preferably an aqueous solvent containing at least water. As an alkaline solution, for example, a sodium hydroxide aqueous solution or a potassium hydroxide aqueous solution is preferable, because of high versatility.

The temperature of the alkali solution in the alkali treatment step is not particularly limited, and for example, it is preferably 5°C or higher and 80°C or lower, and more preferably 10°C or higher and 60°C or lower. The time for immersion of the phosphorus oxoacid group-introduced fibers in the alkali solution in the alkali treatment step is not particularly limited, and for example, it is preferably 5 minutes or more and 30 minutes or less, and more preferably 10 minutes or more and 20 minutes or less. The amount of the alkali solution used in the alkali treatment is not particularly limited, and for example, it is preferably 100% by mass or more and 100000% by mass or less, and more preferably 1000% by mass and 10000% by mass or less, with respect to the absolute dry mass of the phosphorus oxoacid group-introduced fibers.

In order to reduce the amount of the alkaline solution used in the alkali treatment step, the phosphorus oxoacid group-introduced fibers may be washed with water or an organic solvent after the phosphorus oxoacid group introduction step and before the alkali treatment step. After the alkali treatment step and before the defibration step, the alkali-treated phosphorus oxoacid group-introduced fibers are preferably washed with water or an organic solvent, from the viewpoint of the improvement of the handling ability.

< Acid treatment step >

When ultrafine cellulose fibers are produced, an acid treatment may be performed on the phosphorus oxoacid group-introduced fibers between the step of introducing phosphorus oxoacid groups and the after-mentioned defibration treatment step. For example, a phosphorus oxoacid group introduction step, an acid treatment, an alkali treatment, and a defibration treatment may be performed in this order.

Such an acid treatment method is not particularly limited, and for example, a method of immersing the phosphorus oxoacid group-introduced fibers in an acid solution containing an acid may be applied. The concentration of the used acid solution is not particularly limited, and for example, it is preferably 10% by mass or less, and more preferably 5% by mass or less. In addition, the pH of the used acid solution is not particularly limited, and for example, it is preferably a pH value of 0 or more and 4 or less, and more preferably a pH value of 1 or more and 3 or less. Examples of the acid contained in the acid solution that can be used herein may include inorganic acid, sulfonic acid, and carboxylic acid. Examples of the inorganic acid may include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid may include methanesulfonic acid, ethanesulfonic acid, benzenesulfonic acid, p-toluenesulfonic acid, and trifluoromethanesulfonic acid. Examples of the carboxylic acid may include formic acid, acetic acid, citric acid, gluconic acid, lactic acid, oxalic acid, and tartaric acid. Among these acids, it is particularly preferable to use hydrochloric acid or sulfuric acid.

The temperature of the acid solution used in the acid treatment is not particularly limited, and for example, it is preferably 5°C or higher and 100°C or lower, and more preferably 20°C or higher and 90°C or lower. The time for immersion of the fiber raw material in the acid solution in the acid treatment is not particularly limited, and for example, it is preferably 5 minutes or more and 120 minutes or less, and more preferably 10 minutes or more and 60 minutes or less. The amount of the acid solution used in the acid treatment is not particularly limited, and for example, it is preferably 100% by mass or more and 100000% by mass or less, and more preferably 1000% by mass or more and 10000% by mass or less, with respect to the absolute dry mass of the phosphorus oxoacid group-introduced fibers.

< Defibration treatment step >

The defibration treatment step is a step of performing a fibrillation treatment on a phosphorous acid esterified cellulose raw material (phosphorous acid group-introduced fibers) to obtain cellulose fibers having a fiber width of 1000 nm or less and having phosphorous acid groups. In the defibration treatment step, for example, a defibration treatment apparatus can be used. Such a defibration treatment apparatus is not particularly limited, and for example, a high-speed defibrator, a grinder (stone mill-type crusher), a high-pressure homogenizer, an ultrahigh-pressure homogenizer, a high-pressure collision-type crusher, a ball mill, a bead mill, a disc-type refiner, a conical refiner, a twin-screw kneader, an oscillation mill, a homomixer under high-speed rotation, an ultrasonic disperser, a beater or the like can be used. Among the above-described defibration treatment apparatuses, it is more preferable to use a high-speed defibrator, a high-pressure homogenizer, and an ultrahigh-pressure homogenizer, which are less affected by milling media, and are less likely to be contaminated.

In the defibration treatment step, for example, the phosphorous acid group-introduced fibers are preferably

diluted with a dispersion medium to prepare a slurry. As a dispersion medium, water, and one type or two or more types selected from organic solvents such as polar organic solvents can be used. The polar organic solvent is not particularly limited, and for example, alcohols, polyhydric alcohols, ketones, ethers, esters, aprotic polar solvents, etc. are preferable. Examples of the alcohols may include methanol, ethanol, isopropanol, n-butanol, and isobutyl alcohol. Examples of the polyhydric alcohols may include ethylene glycol, propylene glycol, and glycerin. Examples of the ketones may include acetone and methyl ethyl ketone (MEK). Examples of the ethers may include diethyl ether, tetrahydrofuran, ethylene glycol monomethyl ether, ethylene glycol monoethyl ether, ethylene glycol mono n-butyl ether, and propylene glycol monomethyl ether. Examples of the esters may include ethyl acetate and butyl acetate. Examples of the aprotic polar solvents may include dimethyl sulfoxide (DMSO), dimethylformamide (DMF), dimethylacetamide (DMAc), and N-methyl-2-pyrrolidinone (NMP).

The solid concentration of the ultrafine cellulose fibers upon the defibration treatment can be determined, as appropriate. In addition, in a slurry obtained by dispersing the phosphorous acid group-introduced fibers in a dispersion medium, solids other than the phosphorus oxoacid group-introduced fibers, such as hydrogen-binding urea, may be comprised.

(Cellulose fiber-dispersed solution)

The present invention relates to a cellulose fiber-dispersed solution comprising cellulose fibers having a fiber width of 1000 nm or less and having a phosphorus oxoacid group or a phosphorus oxoacid group-derived substituent, and a dispersion medium. Herein, when the content of the cellulose fibers in the cellulose fiber-dispersed solution is set to be 0.2% by mass, the total light transmittance is 93% or more.

In a first aspect of the cellulose fiber-dispersed solution of the present invention, when the first amount of dissociated acid in the cellulose fibers is set to be A1 and the total amount of dissociated acid in the cellulose fibers is set to be A2, the value of A1/A2 is 0.51 or more. Besides, the first amount of dissociated acid (A1) and the total amount of dissociated acid (A2) are values measured by the aforementioned measurement methods. The value of A1/A2 is preferably 0.64 or more, and more preferably 0.80 or more. In addition, the upper limit value of the value of A1/A2 is preferably 1.0.

In a second aspect of the cellulose fiber-dispersed solution of the present invention, the cellulose fibers have a fiber width of 1000 nm or less and also have a phosphorous acid group or a phosphorous acid group-derived substituent. Even in the second aspect, the value of A1/A2 in the cellulose fibers preferably satisfies the aforementioned numerical value range.

The cellulose fiber-dispersed solution of the present invention may also be a slurry obtained in the aforementioned defibration treatment step. In addition, the slurry obtained in the defibration treatment step may be condensed or dried to obtain a gelatinous or solid cellulose fiber-containing material, and thereafter, the cellulose fiber-containing material may be re-dispersed in a solvent to obtain a cellulose fiber-dispersed solution.

The type of the dispersion medium contained in the cellulose fiber-dispersed solution is not particularly limited, and examples of the dispersion medium may include water, an organic solvent, and a mixture of water and an organic solvent. Examples of the organic solvent may include alcohols, polyhydric alcohols, ketones, ethers, dimethyl sulfoxide (DMSO), dimethylformamide (DMF), and dimethylacetamide (DMAc). Examples of the alcohols may include methanol, ethanol, n-propanol, isopropanol, n-butanol, and t-butyl alcohol. Examples of the polyhydric alcohols may include ethylene glycol and glycerin. Examples of the ketones may include acetone and methyl ethyl ketone. Examples of the ethers may include diethyl ether, tetrahydrofuran, ethylene glycol monomethyl ether, ethylene glycol monoethyl ether, ethylene glycol mono-n-butyl ether, and ethylene glycol mono-t-butyl ether.

The solid concentration in the cellulose fiber-dispersed solution is preferably 0.1% by mass or more, more preferably 1% by mass or more, and further preferably 5% by mass or more, with respect to the total mass of the cellulose fiber-dispersed solution. On the other hand, the solid concentration in the cellulose fiber-dispersed solution is preferably 90% by mass or less, and more preferably 50% by mass or less, with respect to the total mass of the cellulose fiber-dispersed solution.

Although the cellulose fiber-dispersed solution of the present invention is a dispersed solution in which cellulose fibers having phosphorous acid groups are dispersed, it is a dispersed solution having high transparency. Conventionally, in such a dispersed solution in which cellulose fibers having phosphorous acid groups are dispersed, there have been cases where the transparency of the dispersed solution decreases or the viscosity of the dispersed solution decreases. In the present invention, however, by controlling the decomposition percentage of the urea and/or the urea derivative to a predetermined value or less in the step of producing cellulose fibers, the transparency of a dispersed solution, in which cellulose fibers having phosphorous acid groups are dispersed, has been successfully increased. Moreover, in the present invention, by setting the decomposition percentage of the urea and/or the urea derivative to be a predetermined value or less, the viscosity of a dispersed solution, in which cellulose fibers having phosphorous acid groups are dispersed, can also be increased.

Specifically, the total light transmittance of the cellulose fiber-dispersed solution may be 93% or more, and it is preferably 95% or more, more preferably 96% or more, and further preferably 97% or more. It is to be noted that the above-described total light transmittance is a value obtained by diluting the cellulose fiber-dispersed solution with ion exchange water to a concentration of 0.2% by mass, and then measuring it in accordance with JIS K 7361. For the measurement of the total light transmittance, a hazemeter is used, and the dispersed solution is filled into a liquid glass cell having an optical path length of 1 cm. Besides, the zero point is measured with ion exchange water which is placed in the same glass cell. The fact that the total light transmittance of the cellulose fiber-dispersed solution is within the above-described range also means that the phosphorus oxoacid possessed by the cellulose fibers is not excessively condensed.

In addition, the haze of the cellulose fiber-dispersed solution is preferably 25% or less, more preferably 20% or less, further preferably 15% or less, still further preferably 10% or less, and particularly preferably 5% or less. The haze of the cellulose fiber-dispersed solution may also be 0%. It is to be noted that the above-described haze value is a value obtained by diluting the cellulose fiber-dispersed solution with ion exchange water to a concentration of 0.2% by mass, and then measuring it in accordance with JIS K 7136. For the measurement of the haze, a hazemeter is used, and the dispersed solution is filled into a liquid glass cell having an optical path length of 1 cm. Besides, the zero point is measured with ion exchange water which is placed in the same glass cell.

The transmittance at a wavelength of 600 nm of the cellulose fiber-dispersed solution is preferably 85% or more, more preferably 90% or more, and further preferably 95% or more. It is to be noted that the above-described transmittance is a value obtained by diluting the cellulose fiber-dispersed solution with ion exchange water to 0.2% by mass, and then irradiating the diluted solution with a light having a wavelength of 600 nm, using an ultraviolet and visible spectrophotometer. Upon the measurement of the transmittance at a wavelength of 600 nm, the dispersed solution is filled into a liquid glass cell having an optical path length of 1 cm. Besides, the zero point is measured with ion exchange water which is placed in the same glass cell.

When the content of the cellulose fibers in the cellulose fiber-dispersed solution is set to be 0.4% by mass, the type B viscosity is preferably 5000 mPa·s or more, more preferably 8000 mPa·s or more, and further preferably 10000 mPa·s or more. The upper limit value of the viscosity of the cellulose fiber-dispersed solution is not particularly limited, and it is preferably 100000 mPa·s. It is to be noted that the above-described viscosity is a value obtained by diluting the cellulose fiber-dispersed solution to a solid concentration of 0.4% by mass, then stirring the diluted solution using a disperser at 1500 rpm for 5 minutes to sufficiently homogenize a slurry, then leaving the slurry at rest under the environment of 23°C and a relative humidity of 50% for 24 hours, and then measuring the viscosity using a type B viscometer. The measurement conditions are set to be conditions at 23°C, and the viscosity after the slurry has been rotated at 3 rpm for 3 minutes is measured. As a measuring device, the analog viscometer T-LVT manufactured by BROOKFIELD can be used.

< Optical components >

The cellulose fiber-dispersed solution may further comprise optional components. Examples of such optional components may include antifoaming agents, lubricants, ultraviolet absorbing agents, dyes, pigments, stabilizers, surfactants, and antiseptics. Moreover, the cellulose fiber-dispersed solution may comprise, as optional components, hydrophilic polymers, hydrophilic low-molecular-weight substances, organic ions, and the like.

The hydrophilic polymer is preferably a hydrophilic oxygen-containing organic compound (provided that the above-described cellulose fibers are excluded). Examples of the oxygen-containing organic compound may include polyethylene glycol, polyethylene oxide, casein, dextrin, starch, modified starch, polyvinyl alcohol, modified polyvinyl alcohol (acetoacetylated polyvinyl alcohol, etc.), polyvinyl pyrrolidone, polyvinyl methyl ether, polyacrylates, acrylic acid alkyl ester copolymers, urethane copolymers, and cellulose derivatives (hydroxyethyl cellulose, carboxyethyl cellulose, carboxymethyl cellulose, etc.).

The hydrophilic low-molecular-weight substance is preferably a hydrophilic oxygen-containing organic compound, and more preferably polyhydric alcohol. Examples of the polyhydric alcohol may include glycerin, sorbitol, and ethylene glycol.

Examples of the organic ion include tetraalkylammonium ions and tetraalkylphosphonium ions. Examples of the tetraalkylammonium ions include a tetramethylammonium ion, a tetraethylammonium ion, a tetrapropylammonium ion, a tetrabutylammonium ion, a tetrapentylammonium ion, a tetrahexylammonium ion, a tetraheptylammonium ion, a tributylmethylammonium ion, a lauryltrimethylammonium ion, a cetyltrimethylammonium ion, a stearyltrimethylammonium ion, an octyldimethylethylammonium ion, a lauryldimethylethylammonium ion, a didecyldimethylammonium ion, a lauryldimethylbenzylammonium ion, and a tributylbenzylammonium ion. Examples of the tetraalkylphosphonium ions include a tetramethylphosphonium ion, a tetraethylphosphonium ion, a tetrapropylphosphonium ion, a tetrabutylphosphonium ion, and a lauryltrimethylphosphonium ion. In addition, tetrapropylonium ions and tetrabutylonium ions may include tetra-n-propylonium ions and tetra-n-butylonium ions, respectively.

(Molded body)

The present invention may also relate to a molded body formed from the aforementioned cellulose fiber-dispersed solution. In the present description, the molded body is a solid form that is molded to have a desired shape. Examples of the molded body may include a sheet, a bead, and a filament. Among others, the molded body is preferably a sheet, a bead, or a filament. When the molded body is a bead, the particle diameter of the bead is preferably 0.1 mm or more and 10 mm or less. When the molded body is a filament, the width of the filament is preferably 0.1 mm or more and 10 mm or less, and the length of the filament is preferably 1 mm or more and 10000 mm or less.

(Sheet)

In particular, the present invention preferably relates to a sheet formed from the aforementioned cellulose fiber-dispersed solution. That is to say, the sheet of the present invention is a sheet comprising cellulose fibers having a fiber width of 1000 nm or less and having a phosphorus oxoacid group or a phosphorus oxoacid group-derived substituent. Herein, when the basis weight of the sheet is set to be 50 $g/m^2$, the haze is 20% or less. Besides, when the basis weight of the sheet is set to be 50 $g/m^2$, the haze is preferably 10% or less, and is also preferably 5% or less. The haze of the sheet is a value measured, for example, in accordance with JIS K 7136, using a hazemeter (manufactured by MURAKAMI COLOR RESEARCH LABORATORY Co., Ltd.; HM-150).
In a first aspect of the sheet of the present invention, when the first amount of dissociated acid in the cellulose fibers is set to be A1 and the total amount of dissociated acid in the cellulose fibers is set to be A2, the value of A1/A2 is 0.51 or more. Besides, the first amount of dissociated acid (A1) and the total amount of dissociated acid (A2) are values measured by the aforementioned measurement methods. The value of A1/A2 is preferably 0.64 or more, and more preferably 0.80 or more. In addition, the upper limit value of the value of A1/A2 is preferably 1.0. It is to be noted that, when A1/A2 is calculated from sheet-like cellulose fibers, the sheet-like cellulose fibers are immersed in ion exchange water for a sufficient time of period, and a re-dispersion treatment is then performed using a disperser to obtain a slurry of the cellulose fibers, followed by measurement and calculation.
In a second aspect of the sheet of the present invention, the cellulose fibers have a fiber width of 1000 nm or less and also have a phosphorous acid group or a phosphorous acid group-derived substituent. Even in the second aspect, the value of A1/A2 in the cellulose fibers preferably satisfies the aforementioned numerical value range.
Upon the measurement of the haze of a sheet, a sheet having a basis weight of 50 $g/m^2$ is used in various measurements. However, a case where the basis weight of the obtained sheet is not 50 $g/m^2$ is also assumed. In such a case, a step of re-dispersing the sheet in water to produce a sheet with a basis weight of 50 $g/m^2$ can be established before the measurement. In addition, for example, when the values of a sheet having a basis weight of 45 $g/m^2$ and a sheet having a basis weight of 55 $g/m^2$, such as haze, are known, estimated values can be obtained by extrapolation from those values.
The thickness of the sheet of the present invention is not particularly limited, and for example, it is preferably 5 $\mu$m or more, more preferably 10 $\mu$m or more, and further preferably 20 $\mu$m or more. In addition, the upper limit value of the thickness of the sheet is not particularly limited, and it may be, for example, 1000 $\mu$m. The thickness of the sheet can be measured, for example, using a stylus thickness gauge (manufactured by Mahr; Millitron 1202 D).
The basis weight of the sheet is not particularly limited, and for example, it is preferably 10 $g/m^2$ or more, more preferably 20 $g/m^2$ or more, and further preferably 30 $g/m^2$ or more. On the other hand, the basis weight of the sheet is not particularly limited, and for example, it is preferably 200 $g/m^2$ or less, and more preferably 180 $g/m^2$ or less. Herein, the basis weight of the sheet can be calculated, for example, in accordance with JIS P 8124.
The density of the sheet is not particularly limited, and for example, it is preferably 0.1 $g/cm^3$ or more, more preferably 0.5 $g/cm^3$ or more, and further preferably 1.0 $g/cm^3$ or more. On the other hand, the density of the sheet is not particularly limited, and for example, it is preferably 5.0 $g/cm^3$ or less, and more preferably 3.0 $g/cm^3$ or less. Herein, the density of the sheet can be measured by subjecting a 50-mm square sheet to humidity conditioning under conditions of 23°C and a relative humidity of 50% for 24 hours, and then measuring the thickness and mass of the sheet.
The content of the cellulose fibers in the sheet is, for example, preferably 0.5% by mass or more, more preferably 1% by mass or more, further preferably 5% by mass or more, and particularly preferably 10% by mass or more, with respect to the total mass of the sheet. In addition, the upper limit value of the content of the cellulose fibers in the sheet is not particularly limited, and it may be 100% by mass, or 95% by mass, with respect to the total mass of the sheet.
The sheet may comprise optional components, which may be comprised in a cellulose fiber-dispersed solution. In addition, the sheet may comprise water or an organic solvent.

(Method for producing sheet)

The method for producing an ultrafine cellulose fiber-containing sheet preferably comprises a coating step of

applying the cellulose fiber-dispersed solution onto a base material, or a papermaking step of making paper from the slurry, as described below.

< Coating step >

In the coating step, for example, a cellulose fiber-dispersed solution (hereinafter also simply referred to as a "slurry") is applied onto a base material, and is then dried to form a sheet, which is then detached from the base material, so as to obtain a sheet. In addition, using a coating apparatus and a long base material, the sheets can be continuously produced.

The material of the base material used in the coating step is not particularly limited. A base material having higher wettability to the cellulose fiber-dispersed solution (slurry) is preferable because the shrinkage of the sheet or the like upon drying can be suppressed. It is preferable to select one from which a sheet formed after drying can be easily detached. Of these, a resin film or plate, or a metal film or plate is preferable, but is not particularly limited thereto. Examples of the base material that can be used herein may include: resin films or plates, such as those made of polypropylene, acryl, polyethylene terephthalate, vinyl chloride, polystyrene, polycarbonate, or polyvinylidene chloride; metal films or plates, such as those made of aluminum, zinc, copper, or iron; the aforementioned films or plates, the surfaces of which are subjected to an oxidation treatment; and stainless steel films or plates and brass films or plates.

When the slurry has a low viscosity and spreads on the base material in the coating step, a damming frame may be fixed and used on the base material in order to obtain a sheet having a predetermined thickness and basis weight. The damming frame is not particularly limited, and for example, it is preferable to select ones from which the edges of the sheet adhering thereto after drying can be easily detached. From such a viewpoint, frames molded from resin plates or metal plates are more preferable. In the present embodiment, examples of the frames that can be used herein may include: frames molded from resin plates, such as a polypropylene plate, an acryl plate, a polyethylene terephthalate plate, a vinyl chloride plate, a polystyrene plate, a polycarbonate plate, or a polyvinylidene chloride plate; frames molded from metal plates, such as an aluminum plate, a zinc plate, a copper plate, or an iron plate; the aforementioned frames, the surfaces of which are subjected to an oxidation treatment; and frames molded from stainless steel plates, brass plates, etc. A coater for applying the slurry onto the base material is not particularly limited, and examples of such a coater that can be used herein may include roll coaters, gravure coaters, die coaters, curtain coaters, and air doctor coaters. Among these, die coaters, curtain coaters, and spray coaters are particularly preferable because these coaters can provide more even thickness to the sheet.

The slurry temperature and the ambient temperature applied upon application of the slurry onto the base material are not particularly limited, and for example, the temperatures are preferably 5°C or higher and 80°C or lower, more preferably 10°C or higher and 60°C or lower, further preferably 15°C or higher and 50°C or lower, and particularly preferably 20°C or higher and 40°C or lower. When the coating temperature is equal to or higher than the above-described lower limit value, it is possible to easily apply the slurry onto the base material. When the coating temperature is equal to or lower than the above-described upper limit value, it is possible to suppress volatilization of the dispersion medium during the coating.

In the coating step, it is preferable to apply the slurry onto the base material, so that the finished basis weight of the sheet becomes preferably 10 $g/m^2$ or more and 200 $g/m^2$ or less, and more preferably 20 $g/m^2$ or more and 180 $g/m^2$ or less. By applying the slurry so that the basis weight can be within the above-described range, a sheet having excellent strength can be obtained.

As described above, the coating step comprises a step of drying the slurry applied onto the base material. The step of drying the slurry is not particularly limited, and for example, a contactless drying method or a method of drying the sheet while locking the sheet, or a combination of these methods may be applied.

The contactless drying method is not particularly limited, and for example, a method for drying by heating with hot air, infrared radiation, far-infrared radiation, or near-infrared radiation (a drying method by heating) or a method for drying in vacuum (a vacuum drying method) can be applied. Although the drying method by heating and the vacuum drying method may be combined with each other, the drying method by heating is usually applied. The drying with infrared radiation, far-infrared radiation, or near-infrared radiation is not particularly limited, and for example, it can be performed using an infrared apparatus, a far-infrared apparatus, or a near-infrared apparatus.

The heating temperature applied in the drying method by heating is not particularly limited, and it is preferably 20°C or higher and 150°C or lower, and more preferably 25°C or higher and 105°C or lower. If the heating temperature is set to be equal to or higher than the above-described lower limit value, the dispersion medium can be rapidly volatilized. On the other hand, if the heating temperature is set to be equal to or lower than the above-described upper limit value, reduction in costs required for the heating and suppression of the thermal discoloration of the cellulose fibers can be realized.

< Papermaking step >

The papermaking step is carried out by making a paper from a slurry using a paper machine. The paper machine used in the papermaking step is not particularly limited, and examples thereof may include continuous paper machines such as a Fourdrinier paper machine, a cylinder paper machine, and an inclined paper machine, and a multilayer combination paper machine, which is a combination thereof. A known papermaking method, such as papermaking by hand, may be adopted in the papermaking step.

The papermaking step is carried out by subjecting the slurry to wire-filtration and dehydration to obtain a sheet that is in a wet state, and then pressing and drying this sheet. The filter fabric used in the filtration and dehydration of the slurry is not particularly limited, and for example, a filter fabric, through which cellulose fibers do not pass and the filtration speed is not excessively slow, is more preferable. Such filter fabric is not particularly limited, and for example, a sheet, a woven fabric, or a porous membrane, each consisting of an organic polymer, is preferable. Preferred examples of the organic polymer may include, but are not particularly limited to, non-cellulose organic polymers such as polyethylene terephthalate, polyethylene, polypropylene, and polytetrafluoroethylene (PTFE). In the present embodiment, examples of the filter fabric may include a polytetrafluoroethylene porous membrane having a pore size of 0.1 μm or more and 20 μm or less, and a woven fabric made of polyethylene terephthalate or polyethylene having a pore size of 0.1 μm or more and 20 μm or less.

In the sheet formation step, the method for producing a sheet from a slurry can be carried out, for example, using a production apparatus comprising a dewatering section for ejecting a slurry comprising cellulose fibers onto the upper surface of an endless belt and then dewatering a dispersion medium contained in the ejected slurry to form a web, and a drying section for drying the web to produce a sheet. The endless belt is provided across from the dewatering section to the drying section, and the web formed in the dewatering section is transferred to the drying section while being placed on the endless belt.

The dehydration method used in the papermaking step is not particularly limited, and for example, a dehydration method conventionally used for paper production may be applied. Among others, a method comprising performing dehydration using a Fourdrinier, cylinder, tilted wire, or the like and then performing dehydration using a roll press is preferable. In addition, the drying method used in the papermaking step is not particularly limited, and for example, a drying method used for paper production may be applied. Among others, a drying method using a cylinder dryer, a Yankee dryer, a hot air dryer, a near-infrared heater, or an infrared heater is more preferable.

(Intended use)

The cellulose fibers obtained by the production method of the present invention can be used as a thickener or a particle dispersion stabilizer. Moreover, the cellulose fibers obtained by the production method of the present invention can be mixed with a solvent to form a cellulose fiber-dispersed solution, or a sheet in which ultrafine cellulose fibers are dispersed can be formed from the slurry. Furthermore, the cellulose fibers of the present invention can be preferably used to be mixed with an organic solvent containing a resin component. By mixing the ultrafine cellulose fibers of the present invention with an organic solvent containing a resin component, a resin composite, in which the ultrafine cellulose fibers are uniformly dispersed, can be formed. Likewise, a re-dispersed slurry of ultrafine cellulose fibers is used to form a film, and thus, can be used as various types of films.

Moreover, the cellulose fibers obtained by the production method of the present invention can be used, for example, as a reinforcing agent or an additive, in cements, paints, inks, lubricants, etc. Furthermore, the molded body obtained by applying the cellulose fibers onto the base material is also suitable for intended uses, such as reinforcing materials, interior materials, exterior materials, wrapping materials, electronic materials, optical materials, acoustic materials, processing materials, transport equipment components, electronic equipment components, and electrochemical element components.

Examples

The characteristics of the present invention will be more specifically described in the following examples and comparative examples. The materials, used amounts, ratios, treatment contents, treatment procedures, etc. described in the following examples can be appropriately modified, unless they are deviated from the gist of the present invention. Accordingly, the scope of the present invention should not be restrictively interpreted by the following specific examples.

< Production Example 1 >

[Production of ultrafine cellulose fiber-dispersed solution (A)]

The needle bleached kraft pulp manufactured by Oji Paper Co., Ltd. (solid content: 93% by mass; basis weight: 208 g/$m^2$, sheet-shaped; Canadian Standard Freeness (CSF) measured according to JIS P 8121 after defibration: 700 ml) was used as a raw material pulp.

A phosphorylation treatment was performed on this raw material pulp as follows. First, a mixed aqueous solution of phosphorous acid (phosphonic acid) and urea was added to 100 parts by mass (absolute dry mass) of the above raw material pulp, and the obtained mixture was adjusted to result in 33 parts by mass of the phosphorous acid (phosphonic acid), 120 parts by mass of the urea and 150 parts by mass of water, so as to obtain a chemical solution-impregnated pulp. Subsequently, the obtained chemical solution-impregnated pulp was heated with a hot air dryer at 165°C for 250 seconds, so that phosphorus oxoacid groups were introduced into cellulose in the pulp, thereby obtaining phosphorous oxoacid esterified pulp 1.

Subsequently, a washing treatment was performed on the obtained phosphorous oxoacid esterified pulp 1. The washing treatment was carried out by repeating the operation to pour 10 L of ion exchange water onto 100 g (absolute dry mass) of the phosphorous oxoacid esterified pulp 1 to obtain a pulp dispersed solution, which was then uniformly dispersed by stirring, followed by filtration and dehydration. The washing was terminated at a time point at which the electric conductivity of the filtrate became 100 μS/cm or less.

Subsequently, a neutralization treatment was performed on the phosphorous oxoacid esterified pulp 1 after the washing, as follows. First, the phosphorous oxoacid esterified pulp 1 after the washing was diluted with 10 L of ion exchange water, and then, while stirring, a 1 N sodium hydroxide aqueous solution was slowly added to the diluted solution to obtain phosphorous oxoacid esterified pulp slurry 1 having a pH value of 12 or more and 13 or less. Thereafter, the phosphorous oxoacid esterified pulp slurry 1 was dehydrated, so as to obtain a neutralized phosphorous oxoacid esterified pulp 1. Subsequently, the above-described washing treatment was performed on the phosphorous oxoacid esterified pulp 1 after the neutralization treatment.

The infrared absorption spectrum of the thus obtained phosphorous oxoacid esterified pulp 1 was measured by FT-IR. As a result, absorption based on phosphonic acid groups as tautomers of phosphorous acid groups, P = O, was observed around 1210 $cm^{-1}$, and thus, addition of the phosphorous acid groups (phosphonic acid groups) to the pulp was confirmed.

Moreover, the obtained phosphorous oxoacid esterified pulp 1 was analyzed using an X-ray diffractometer. As a result, it was confirmed that there were typical peaks at two positions near $2\theta$ = 14° or more and 17° or less, and near $2\theta$ = 22° or more and 23° or less. Thus, the phosphorous oxoacid esterified pulp 1 was confirmed to have cellulose type I crystals.

Ion exchange water was added to the obtained phosphorous oxoacid esterified pulp 1, so as to prepare a slurry having a solid concentration of 2% by mass. This slurry was treated using a wet atomization apparatus (manufactured by Sugino Machine Limited, Star Burst) at a pressure of 200 MPa once to obtain an ultrafine cellulose fiber-dispersed solution (A) comprising ultrafine cellulose fibers.

It was confirmed according to X-ray diffraction that these ultrafine cellulose fibers maintained cellulose type I crystals. Moreover, the fiber width of the ultrafine cellulose fibers was measured using a transmission electron microscope. As a result, ultrafine cellulose fibers having a fiber width of 3 to 5 nm were observed.

The phosphorous oxoacid esterified pulps obtained in all of the following production examples were measured by FT-IR, in terms of the infrared absorption spectrum. As a result, absorption based on phosphonic acid groups as tautomers of phosphorous acid groups, P = O, was observed around 1210 $cm^{-1}$, and thus, addition of the phosphorous acid groups (phosphonic acid groups) to the phosphorous oxoacid esterified pulps was confirmed. Moreover, the phosphorous oxoacid esterified pulps obtained in all of the following production examples were analyzed using an X-ray diffractometer. As a result, it was confirmed that there were typical peaks at two positions near $2\theta$ = 14° or more and 17° or less, and near $2\theta$ = 22° or more and 23° or less. Thus, the phosphorous oxoacid esterified pulps were confirmed to have cellulose type I crystals.

Furthermore, it was confirmed according to X-ray diffraction that the ultrafine cellulose fiber-dispersed solutions obtained in all of the following production examples maintained cellulose type I crystals. Further, the fiber width of the ultrafine cellulose fibers was measured using a transmission electron microscope. As a result, ultrafine cellulose fibers having a fiber width of 3 to 5 nm were observed.

< Production Examples 2 to 6 >

An ultrafine cellulose fiber-dispersed solution comprising ultrafine cellulose fibers was obtained in the same manner as that of Production Example 1, with the exception that the number of treatments with a wet atomization

apparatus was set to be 2 to 6 times, respectively.

< Production Examples 7 to 9 and 14 >

An ultrafine cellulose fiber-dispersed solution comprising ultrafine cellulose fibers was obtained in the same manner as that of Production Example 2, with the exception that the heating time with a hot air dryer was set to be 300 seconds, 400 seconds, 1350 second, and 3600 seconds, respectively, as shown in Table 1.

< Production Examples 10 to 13 >

An ultrafine cellulose fiber-dispersed solution comprising ultrafine cellulose fibers was obtained in the same manner as that of Production Example 9, with the exception that the number of treatments with a wet atomization apparatus was set to be 6, 10, 20, and 30 times, respectively, as shown in Table 1.

< Production Example 15 >

An ultrafine cellulose fiber-dispersed solution comprising ultrafine cellulose fibers was obtained in the same manner as that of Production Example 7, with the exception that the amount of urea added was changed to 23 parts by mass upon the phosphorylation reaction.

< Production Example 16 >

An ultrafine cellulose fiber-dispersed solution comprising ultrafine cellulose fibers was obtained in the same manner as that of Production Example 7, with the exception that the temperature for heating a chemical solution-impregnated pulp (the reaction temperature applied upon the phosphorylation reaction) was changed to 180°C.

< Production Example 2A >

An ultrafine cellulose fiber-dispersed solution comprising ultrafine cellulose fibers was obtained in the same manner as that of Production Example 2, with the exceptions that the mixing ratio of substances into 100 parts by mass (absolute dry mass) of the raw material pulp was changed to 42 parts by mass of monosodium hydrogen phosphite, 120 parts by mass of urea, and 150 parts by mass of water, and that the heating time was set to be 2250 seconds. Besides, in the case of using monosodium hydrogen phosphite, the speed of introducing phosphorus oxoacid groups into cellulose became slow. Thus, the heating time was set to be longer.

< Production Example 2B >

An ultrafine cellulose fiber-dispersed solution comprising ultrafine cellulose fibers was obtained in the same manner as that of Production Example 2A, with the exception that the heating time was set to be 4500 seconds. Besides, even if the heating time was extended, the amount of the phosphorus oxoacid groups introduced or the physical property values of the ultrafine cellulose fiber-dispersed solution were not significantly fluctuated, but the amount of carbamide groups was somewhat increased.

< Examples 1 to 8, Examples A and B, and Comparative Examples 1 to 8 >

The ultrafine cellulose fiber-dispersed solutions obtained in Production Examples 1 to 16 and Production Examples 2A and 2B were assigned to Examples 1 to 8, Examples A and B, and Comparative Examples 1 to 8, respectively, as shown in Table 1. The decomposition percentage of urea was calculated according to the after-mentioned evaluation method, and further, viscosity, total light transmittance, haze, and transmittance at 600 nm were measured.

< Example 9 >

Ion exchange water was added to the ultrafine cellulose fiber-dispersed solution obtained in Production Example 1 to result in a solid concentration of 0.5% by mass, so as to adjust the concentration. Subsequently, 20 parts by mass of an aqueous solution containing 0.5% by mass of polyethylene oxide (manufactured by SUMITOMO SEIKA CHEMICALS CO., LTD.; PEO-18) was added to 100 parts by mass of this ultrafine cellulose fiber-dispersed solution, thereby obtaining a coating solution.

Subsequently, the coating solution was weighed such that the finished basis weight of the obtained sheet (a

layer constituted with the solid content of the above-described coating solution) became 50 g/m$^2$, and was then applied onto a commercially available acrylic plate, and thereafter, the acrylic plate was dried in a constant-temperature dryer at 50°C. In order to obtain the predetermined basis weight, a damming metal frame (a metal frame having an inside dimension of 180 mm × 180 mm, and a height of 5 cm) was arranged on the acrylic plate. Subsequently, the dried sheet was peeled from the above-described acrylic plate to obtain an ultrafine cellulose fiber-containing sheet. The haze of the obtained ultrafine cellulose fiber-containing sheet was measured according to the after-mentioned evaluation method.

< Example 10 and Comparative Examples 9 and 10 >

An ultrafine cellulose fiber-containing sheet was obtained in the same manner as that of Example 9, with the exception that the ultrafine cellulose fiber-dispersed solution obtained in each of Production Examples 6, 9, and 13 was used instead of the ultrafine cellulose fiber-dispersed solution obtained in Production Example 1. The haze of the obtained ultrafine cellulose fiber-containing sheet was measured according to the after-mentioned evaluation method.

< Evaluation method >

[Measurement of first amount of dissociated acid and total amount of dissociated acid (phosphorus oxoacid groups)]

The amount of phosphorus oxoacid groups in the ultrafine cellulose fibers was measured by treating with an ion exchange resin, a cellulose fiber-containing slurry prepared by diluting an ultrafine cellulose fiber-dispersed solution comprising the ultrafine cellulose fibers as targets with ion exchange water to result in a content of 0.2% by mass, and then performing titration using alkali.

In the treatment with the ion exchange resin, 1/10 by volume of a strongly acidic ion exchange resin (Amberjet 1024; manufactured by Organo Corporation; conditioned) was added to the aforementioned cellulose fiber-containing slurry, and the resultant mixture was shaken for 1 hour. Then, the mixture was poured onto a mesh having 90-μm apertures to separate the resin from the slurry.

In the titration using alkali, a change in the pH value shown by the cellulose fiber-containing slurry after the treatment with the ion exchange resin the slurry was measured, while adding an aqueous solution of 0.1 N sodium hydroxide in each amount of 10 μL for every 5 seconds to the slurry. It is to be noted that the titration was carried out, while nitrogen gas was blown into the slurry from 15 minutes before initiation of the titration. According to this neutralization titration, in a curve formed by plotting pH values measured with respect to the amount of alkali added, two points are confirmed, in which an increment (a derivative of pH with respect to the amount of alkali added dropwise) becomes maximum. Regarding these two points, a maximum point of an increment firstly obtained after addition of alkali is referred to as a first end point, whereas a maximum point of an increment subsequently obtained after addition of alkali is referred to as a second end point (Figure 1). The amount of alkali required from initiation of the titration until the first end point becomes equal to the first amount of dissociated acid in the slurry used in the titration. In addition, the amount of alkali required from initiation of the titration until the second end point becomes equal to the total amount of dissociated acid in the slurry used in the titration. Besides, the value obtained by dividing the amount of alkali required from initiation of the titration until the first end point by a solid content (g) in the slurry to be titrated was defined to be the first amount of dissociated acid (mmol/g). In addition, the value obtained by dividing the amount of alkali required from initiation of the titration until the second end point by a solid content (g) in the slurry to be titrated was defined to be the total amount of dissociated acid (mmol/g).

The amount of carbamide groups in the ultrafine cellulose fibers was measured by drying an ultrafine cellulose fiber-dispersed solution comprising the ultrafine cellulose fibers as targets in a vacuum dryer at 40°C for 24 hours, to obtain an absolute dry state, and then measuring it using the trace total nitrogen analysis device TN-110 manufactured by Mitsubishi Chemical Analytech Co., Ltd. Besides, ionic nitrogen was removed in the neutralization step and the washing step performed on a phosphorous oxoacid esterified pulp. The amount of the carbamide groups introduced (mmol/g) per unit mass of the ultrafine cellulose fibers was calculated by dividing the content (g/g) of nitrogen per unit mass of the ultrafine cellulose fibers obtained by the trace nitrogen analysis by the atomic weight of nitrogen.

< Calculation of decomposition percentage of urea >

The decomposition percentage of urea is a value obtained by dividing a reduction in the mass other than water evaporation (i.e., the amount of urea decomposed) in the phosphorus oxoacid introduction step by the mass of the urea added to the cellulose raw material, and then expressing the obtained value with a mass fraction. This value was measured by the following method.

First, the absolute dry mass of a cellulose raw material (pulp) used in the test was measured. Subsequently, a predetermined amount of chemical solution was added to the cellulose raw material (pulp), and the mass (mo) was

them measured. From the composition of the chemical solution and the initial water content rate of the pulp, the amount of water added (the water amount in the system) ($m_w$) and the amount of urea added ($m_u$) were calculated. Thereafter, the impregnated cellulose raw material (pulp) was subjected to a heat treatment under the aforementioned heat treatment conditions, and the mass (mi) was then measured. Using the measured and calculated masses, the decomposition percentage of the urea [%] was calculated according to the following (formula 1):

$$\text{Decomposition percentage of urea [\%]} = (m_0 - m_w - m_1) / m_u \times 100 \ldots \text{(Formula 1)}.$$

mo: Mass of chemical solution-impregnated pulp before heating
$m_w$: Amount of water added (water amount in system)
mi: Mass of pulp after heating
mu: Amount of urea added

< Measurement of viscosity of ultrafine cellulose fiber-dispersed solution >

The viscosity of the ultrafine cellulose fiber-dispersed solution was measured as follows. First, the ultrafine cellulose fiber-dispersed solution was diluted with ion exchange water to a solid concentration of 0.4% by mass, and was then stirred using a disperser at 1500 rpm for 5 minutes. Subsequently, the viscosity of the thus obtained dispersed solution was measured using a type B viscometer (manufactured by BROOKFIELD, the analog viscometer T-LVT). The measurement conditions were set to be a rotation rate of 3 rpm, and the viscosity value at 3 minutes after initiation of the measurement was defined to be the viscosity of the dispersed solution. The dispersed solution as a measurement target was left at rest under the environment of 23°C and a relative humidity of 50% for 24 hours, before the measurement. The liquid temperature of the dispersed solution upon the measurement was 23°C.

< Measurement of total light transmittance of ultrafine cellulose fiber-dispersed solution>

The total light transmittance of the ultrafine cellulose fiber-dispersed solution was measured by diluting the ultrafine cellulose fiber-dispersed solution after completion of the mechanical treatment step (defibration treatment step) with ion exchange water to a solid concentration of 0.2% by mass, and then measuring it with a hazemeter (manufactured by MURAKAMI COLOR RESEARCH LABORATORY Co., Ltd.; HM-150) in accordance with JIS K 7361, using a liquid glass cell having an optical path length of 1 cm (manufactured by Fujiwara Scientific Company Co., Ltd., MG-40, inverse optical path). Besides, the zero point was measured with ion exchange water which was placed in the same glass cell. The dispersed solution as a measurement target was left at rest under the environment of 23°C and a relative humidity of 50% for 24 hours, before the measurement. The liquid temperature of the dispersed solution upon the measurement was 23°C.

< Measurement of haze of ultrafine cellulose fiber-dispersed solution >

The haze of the ultrafine cellulose fiber-dispersed solution was measured by diluting the ultrafine cellulose fiber-dispersed solution after completion of the mechanical treatment step (defibration treatment step) with ion exchange water to a solid concentration of 0.2% by mass, and then measuring it with a hazemeter (manufactured by MURAKAMI COLOR RESEARCH LABORATORY Co., Ltd.; HM-150) in accordance with JIS K 7136, using a liquid glass cell having an optical path length of 1 cm (manufactured by Fujiwara Scientific Company Co., Ltd., MG-40, inverse optical path). Besides, the zero point was measured with ion exchange water which was placed in the same glass cell. The dispersed solution as a measurement target was left at rest under the environment of 23°C and a relative humidity of 50% for 24 hours, before the measurement. The liquid temperature of the dispersed solution upon the measurement was 23°C.

< Measurement of transmittance at wavelength of 600 nm of ultrafine cellulose fiber-dispersed solution >

The transmittance at a wavelength of 600 nm of the ultrafine cellulose fiber-dispersed solution was measured by diluting the ultrafine cellulose fiber-dispersed solution after completion of the mechanical treatment step (defibration treatment step) with ion exchange water to a solid concentration of 0.2% by mass, and then measuring it using an ultraviolet and visible spectrophotometer (manufactured by Optima, SP3000-nano). For the measurement, a liquid glass cell having an optical path length of 1 cm was used. Besides, the zero point was measured with ion exchange water which was placed in the same glass cell. The dispersed solution as a measurement target was left at rest under the environment of 23°C and a relative humidity of 50% for 24 hours, before the measurement. The liquid temperature of

the dispersed solution upon the measurement was 23°C. It is to be noted that Figure 2 is a light transmittance measurement spectrum of the ultrafine cellulose fiber-dispersed solution obtained in Production Example 6 (the relationship of the light transmittance T to the wavelength λ of light). The light transmittances at representative wavelengths are summarized in the following table.

[Table 1]

| Light transmittances at representative wavelengths | | | | | |
|---|---|---|---|---|---|
| λ [nm] | 200 | 250 | 300 | 350 | 400 |
| *T* [%] | 40.2 | 76.6 | 86.5 | 92.3 | 94.2 |
| λ [nm] | 450 | 500 | 550 | 600 | 650 |
| *T* [%] | 95.5 | 96.3 | 96.8 | 97.3 | 97.5 |
| λ [nm] | 700 | 750 | 800 | 850 | 900 |
| *T* [%] | 97.8 | 98.0 | 98.2 | 98.3 | 98.5 |

< Haze of sheet >

The haze of the sheet was measured in accordance with JIS K 7136, using a hazemeter (manufactured by MURAKAMI COLOR RESEARCH LABORATORY Co., Ltd.; HM-150).

[Table2]

| | | Phosphorus oxoacid group introduction step | | | | Reagent pH before heating | Metal ion amount to phosphorus atom in reagent [mmol/mmol] | A1: First amount of dissociated acid [mmol/g] | A2: Total amount of dissociated acid [mmol/g] | A1/A2 | Carbamide group [mmol/g] | Number of treatments with high-pressure homogenizer | Total light transmittance [%] | Haze [%] | Transmittance [%] at wavelength of 600 nm | Viscosity [mPa·s] |
|---|---|---|---|---|---|---|---|---|---|---|---|---|---|---|---|---|
| | | Heating temperature [°C] | Heating time [sec] | Nitrogen atom/ phosphorus atom Molar ratio (N/P) | Urea decomposition percentage [%] | | | | | | | | | | | |
| Ex. 1 | Production Ex. 1 | 165 | 250 | 10.4 | 37.6 | 1.77 | 0 | 1.51 | 1.55 | 0.974 | 0.06 | 1 | 97.3 | 192 | 872 | 14200 |
| Ex. 2 | Production Ex.2 | | | | | | | | | | | 2 | 99.3 | 24 | 93.5 | 25200 |
| Ex. 3 | Production Ex. 3 | | | | | | | | | | | 3 | 99.6 | 08 | 95.4 | 22400 |
| Ex. 4 | Production Ex. 4 | | | | | | | | | | | 4 | 997 | 05 | 97.0 | 20200 |
| Ex. 5 | Production Ex. 5 | | | | | | | | | | | 5 | 99.7 | 0.4 | 97.2 | 16600 |
| Ex 6 | Production Ex. 6 | | | | | | | | | | | 6 | 997 | 03 | 97.3 | 12200 |
| Ex. 7 | Production Ex. 7 | | 300 | | 55.0 | | | 1.65 | 1.69 | 0.976 | - | 2 | 99.3 | 2.3 | - | 28100 |
| Ex. 8 | Production Ex. 8 | | 400 | | 70.5 | | | 1.86 | 1.91 | 0.974 | - | 2 | 99.5 | 1.3 | - | 25100 |
| Ex. A | Production Ex. 2A | | 2250 | | 73.1 | 4.50 | 1 | 0.97 | 1.01 | 0.960 | 0.41 | 2 | 98.2 | 12.8 | 88.6 | 18400 |
| Ex. B | Production Ex. 2B | | 4500 | | 75.3 | | | 0.96 | 1.00 | 0.960 | 0.69 | 2 | 98.0 | 12.8 | 87.0 | 17200 |

(continued)

| | | Phosphorus oxoacid group introduction step | | | | Reagent pH before heating | Metal ion amount to phosphorus atom in reagent [mmol/mmol] | A1: First amount of dissociated acid [mmol/g] | A2: Total amount of dissociated acid [mmol/g] | A1/A2 | Carbamide group [mmol/g] | Number of treatments with high-pressure homogenizer | Total light transmittance [%] | Haze [%] | Transmittance [%] at wavelength of 600 nm | Viscosity [mPa·s] |
|---|---|---|---|---|---|---|---|---|---|---|---|---|---|---|---|---|
| | | Heating temperature [°C] | Heating time [sec] | Nitrogen atom/ phosphorus atom Molar ratio (N/P) | Urea decomposition percentage [%] | | | | | | | | | | | |
| Comp. Ex. 1 | Production Ex. 9 | | | | | | | | | | | 2 | 73.1 | 35.7 | - | 1000 |
| Comp. Ex. 2 | Production Ex. 10 | | | | | | | | | | | 6 | 79.9 | 33.9 | - | 900 |
| Comp Ex. 3 | Production Ex. 11 | | 1350 | | 97.0 | | | 1.04 | 1.08 | 0.963 | 0.32 | 10 | 84.1 | 30.4 | - | 800 |
| Comp. Ex. 4 | Production Ex 12 | | | | | 1.77 | | | | | | 20 | 85.7 | 26.1 | - | 400 |
| Comp Ex. 5 | Production Ex. 13 | | | | | | 0 | | | | | 30 | 86.0 | 24.1 | - | 200 |
| Comp. Ex. 6 | Production Ex. 14 | | 3600 | | >99 | | | 0.92 | 0.96 | 0.958 | - | 2 | 70.2 | 37.7 | - | 200 |
| Comp. Ex. 7 | Production Ex. 15 | | 300 | 2 | 96.6 | 1.01 | | 1.29 | 1.33 | 0.970 | - | 2 | 72.1 | 36.1 | - | 2000 |
| Comp Ex. 8 | Production Ex 16 | 180 | 300 | 10.4 | 95.3 | 1.77 | | 1.44 | 1.48 | 0.973 | - | 2 | 82.9 | 31.1 | - | 4100 |

[Table 3]

| | Raw material-dispersed solution | Sheet haze [%] |
|---|---|---|
| Ex. 9 | Production Ex. 1 | 19.2 |
| Ex. 10 | Production Ex. 6 | 1.0 |
| Comp. Ex. 9 | Production Ex. 9 | 37.2 |
| Comp. Ex. 10 | Production Ex. 13 | 24.4 |

The cellulose fiber-dispersed solutions obtained in the Examples were excellent in terms of transparency. Specifically, the total light transmittances of the cellulose fiber-dispersed solutions obtained in the Examples were high, and the haze values thereof were low. Moreover, the light transmittance at a wavelength of 600 nm was high. Furthermore, the cellulose fiber-dispersed solutions obtained in the Examples had a high viscosity. On the other hand, in Comparative Examples 3 to 5, the number of treatments with a high-pressure homogenizer was increased. However, the transparency of the obtained cellulose fiber-dispersed solution was low, and the viscosity thereof also tended to be low. That is to say, it was found that the properties of the cellulose fibers to be subjected to fibrillation were significantly associated with the transparency and viscosity of the finally obtained cellulose fiber-dispersed solution, and that when a phosphorus oxoacid group introduction step was not carried out under appropriate conditions, the transparency and viscosity did not tend to be improved, even if the number of defibration treatments was simply increased.

When cellulose fiber-containing sheets were formed from the cellulose fiber-dispersed solutions of the Examples, the obtained sheets had a low haze and high transparency.

## Claims

**1.** A method for producing cellulose fibers, comprising:

mixing a compound having a phosphorous acid group and/or a salt thereof and urea and/or a urea derivative into a cellulose raw material to obtain a phosphorous acid esterified cellulose raw material, and

performing a fibrillation treatment on the phosphorous acid esterified cellulose raw material to obtain cellulose fibers having a fiber width of 1000 nm or less and having a phosphorous acid group or a phosphorous acid group-derived substituent, wherein

in obtaining the phosphorous acid esterified cellulose raw material, the decomposition percentage of the urea and/or the urea derivative is set to be 90% or less.

**2.** The method for producing cellulose fibers according to claim 1, wherein, in obtaining the phosphorous acid esterified cellulose raw material, the ratio (N/P) between the substance amount P (mmol) of phosphorus atoms contained in the compound having a phosphorous acid group and/or a salt thereof and the substance amount N (mmol) of nitrogen atoms contained in the urea and/or the urea derivative is set to be 7.0 or more and 50 or less.

**3.** The method for producing cellulose fibers according to claim 1 or 2, wherein the ratio (Q/P) between the substance amount P (mmol) of phosphorus atoms and the substance amount Q (mmol) of metal ions, contained in the compound having a phosphorous acid group and/or a salt thereof, is 1.0 or less.

**4.** A cellulose fiber-dispersed solution comprising cellulose fibers having a fiber width of 1000 nm or less and having a phosphorus oxoacid group or a phosphorus oxoacid group-derived substituent, and a dispersion medium, wherein

when a first amount of dissociated acid in the cellulose fibers is set to be A1 and a total amount of dissociated acid in the cellulose fibers is set to be A2, the value of A1/A2 is 0.51 or more, and

when the content of the cellulose fibers in the cellulose fiber-dispersed solution is set to be 0.2% by mass, the total light transmittance is 93% or more.

**5.** A cellulose fiber-dispersed solution comprising cellulose fibers having a fiber width of 1000 nm or less and having a phosphorous acid group or a phosphorous acid group-derived substituent, and a dispersion medium, wherein when the content of the cellulose fibers in the cellulose fiber-dispersed solution is set to be 0.2% by mass, the total light transmittance is 93% or more.

**6.** The cellulose fiber-dispersed solution according to claim 4 or 5, wherein when the content of the cellulose fibers in the cellulose fiber-dispersed solution is set to be 0.4% by mass, the type B viscosity is 5000 mPa·s or more.

**7.** A sheet comprising cellulose fibers having a fiber width of 1000 nm or less and having a phosphorus oxoacid group or a phosphorus oxoacid group-derived substituent, wherein

when a first amount of dissociated acid in the cellulose fibers is set to be A1 and a total amount of dissociated acid in the cellulose fibers is set to be A2, the value of A1/A2 is 0.51 or more, and
when the basis weight of the sheet is set to be 50 $g/m^2$, the haze is 20% or less.

**8.** A sheet comprising cellulose fibers having a fiber width of 1000 nm or less and having a phosphorous acid group or a phosphorous acid group-derived substituent, wherein
when the basis weight of the sheet is set to be 50 $g/m^2$, the haze is 20% or less.

[Figure 1]

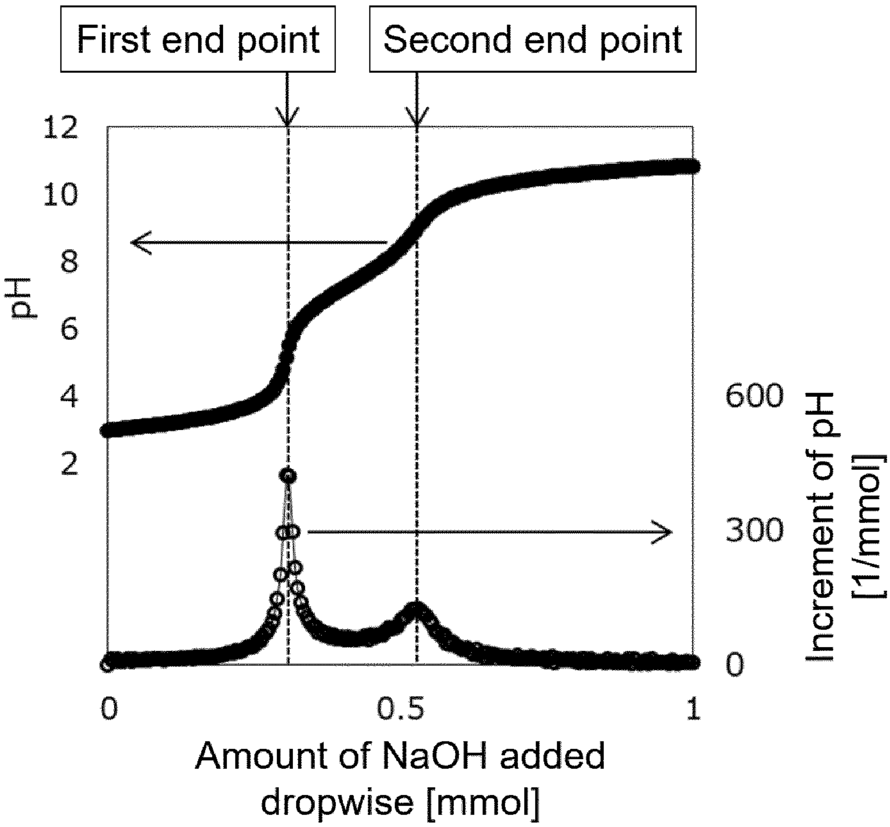
First end point
Second end point
12
10
8
6
4
2
pH
600
300
0
Increment of pH
[1/mmol]
0
0.5
1
Amount of NaOH added
dropwise [mmol]

[Figure 2]

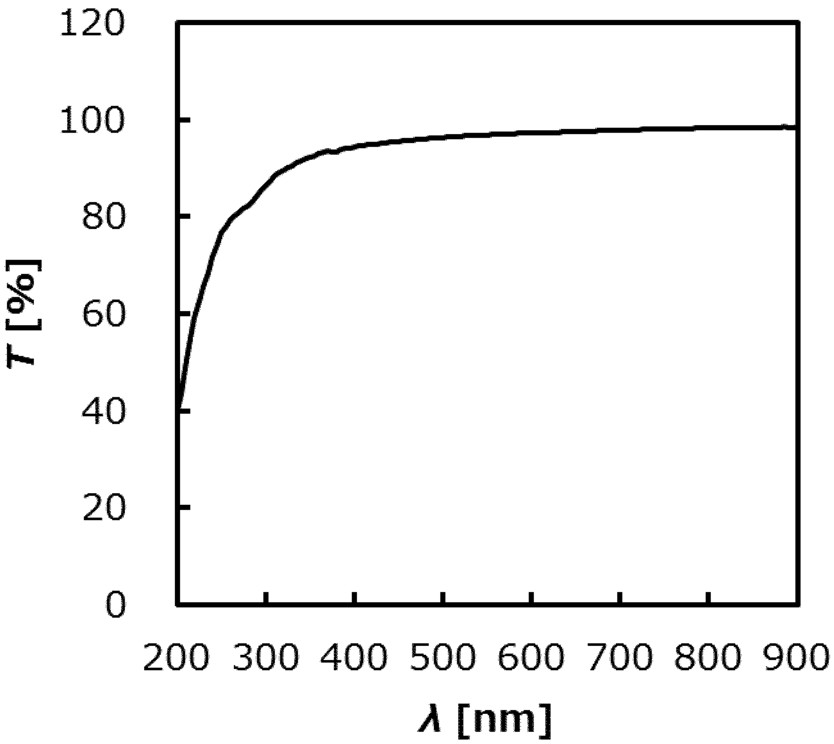

## INTERNATIONAL SEARCH REPORT

International application No. PCT/JP2019/050804

A. CLASSIFICATION OF SUBJECT MATTER
Int. Cl. D01F2/00(2006.01)i, G08B5/00(2006.01)i
FI: C08B5/00, D01F2/00 Z

According to International Patent Classification (IPC) or to both national classification and IPC

B. FIELDS SEARCHED

Minimum documentation searched (classification system followed by classification symbols)
Int. Cl. D01F2/00, G08B5/00

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)
JSTPlus/JMEDPlus/JST7580 (JDreamIII); CAplus/REGISTRY (STN)

C. DOCUMENTS CONSIDERED TO BE RELEVANT

| Category* | Citation of document, with indication, where appropriate, of the relevant passages | Relevant to claim No. |
|---|---|---|
| A | WO 2018/159473 A1 (DAIO PAPER CORP.) 07 September 2018, entire text | 1-8 |
| A | WO 2014/185505 A1 (OJI HOLDINGS CORP.) 20 November 2014, entire text | 1-8 |
| A | WO 2018/159743 A1 (OJI HOLDINGS CORP.) 07 September 2018, entire text | 1-8 |
| A | JP 2017-66273 A (OJI HOLDINGS CORP.) 06 April 2017, entire text | 1-8 |
| A | JP 2018-9116 A (OJI HOLDINGS CORP.) 18 January 2018, entire text | 1-8 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02.03.2020 | 10.03.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/050804

C (Continuation). DOCUMENTS CONSIDERED TO BE RELEVANT

| Category* | Citation of document, with indication, where appropriate, of the relevant passages | Relevant to claim No. |
|---|---|---|
| A | WO 2017/170908 A1 (OJI HOLDINGS CORP.) 05 October 2017, entire text | 1-8 |

Form PCT/ISA/210 (continuation of second sheet) (January 2015)

**INTERNATIONAL SEARCH REPORT**
Information on patent family members

International application No.
PCT/JP2019/050804

| Patent Documents referred to in the Report | Publication Date | Patent Family | Publication Date |
|---|---|---|---|
| WO 2018/159473 A1 | 07.09.2018 | JP 2018-141249 A<br>CA 3052405 A<br>CN 110291249 A<br>KR 10-2019-0120223 A | |
| WO 2014/185505 A1 | 20.11.2014 | JP 2017-25468 A<br>JP 2019-2126 A<br>US 2016/0115249 A1<br>EP 2998435 A1<br>CA 2912520 A<br>CN 105209686 A<br>KR 10-2016-0008607 A<br>CN 107805851 A | |
| WO 2018/159743 A1 | 07.09.2018 | JP 2018-145398 A<br>KR 10-2019-0112317 A<br>TW 201841945 A | |
| JP 2017-66273 A | 06.04.2017 | (Family: none) | |
| JP 2018-9116 A | 18.01.2018 | (Family: none) | |
| WO 2017/170908 A1 | 05.10.2017 | JP 2018-80336 A<br>JP 2018-199826 A<br>JP 2019-90050 A<br>US 2019/0127915 A1<br>EP 3438132 A1<br>CA 3019292 A<br>KR 10-2018-0132757 A<br>CN 109071681 A<br>CA 3050730 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013127141 A
- WO 2014185505 A
- WO 2018159473 A


### Non-patent literature cited in the description


- **SEAGAL et al.** *Textile Research Journal,* 1959, vol. 29, 786